# EUROPÄISCHE PATENTSCHRIFT

(11) **EP 3 878 154 B1**
(45) Veröffentlichungstag und Bekanntmachung des Hinweises auf die Patenterteilung: **11.03.2026**
(21) Anmeldenummer: 19789941.2
(22) Anmeldetag: 15.10.2019
(51) Int. Cl.: H04L 67/12, H04L 69/08, H04L 67/565, H04L 67/5651

(54) **DATENVERMITTLUNGSVORRICHTUNG FÜR EIN FAHRZEUG, SOWIE KORRESPONDIERENDES VERFAHREN, SYSTEM UND PROGRAMM**
DATA MEDIATION APPARATUS FOR A VEHICLE, AND CORRESPONDING METHOD, SYSTEM, AND PROGRAM
DISPOSITIF D'INTERMÉDIATION DE DONNÉES POUR UN VÉHICULE, ET PROCÉDÉ, SYSTÈME ET PROGRAMME CORRESPONDANTS

(30) Priorität: 07.11.2018 DE 102018218927
(43) Veröffentlichungstag der Anmeldung: 15.09.2021
(73) Patentinhaber: VOLKSWAGEN AKTIENGESELLSCHAFT, 38440 Wolfsburg (DE)
(72) Erfinder: ROX, Jonas, 38542 Leiferde (DE); RACU, Razvan, 38108 Braunschweig (DE); HEYEN, Johann, 38104 Braunschweig (DE); STEIN, Steffen, 38112 Braunschweig (DE)
(86) Internationale Anmeldenummer: PCT/EP2019/077979
(87) Internationale Veröffentlichungsnummer: WO 2020/094346

(56) Entgegenhaltungen:
- US-A1- 2009 005 916
- US-A1- 2013 297 630

## Beschreibung

Die vorliegende Erfindung bezieht sich auf eine Datenvermittlungsvorrichtung gemäß Anspruch 1, ein Datenvermittlungsverfahren für ein Fahrzeug gemäß Anspruch 12, und ein Computerprogramm gemäß Anspruch 14.

Fahrzeuge umfassen meist eine Vielzahl von Fahrzeugkomponenten, von Sensoren und Aktoren des Motors über die Steuerung von Heizfunktionen bis hin zu Infotainment-Systemen (Kurzwort für Systeme zur Information und Entertainment/Unterhaltung). Da diese Fahrzeugkomponenten meist nicht isoliert genutzt werden sondern im Gegenteil Daten untereinander austauschen, sind über viele Jahrzehnte Kommunikationsprotokolle und Netzwerke geschaffen worden, die dazu dienen, die verschiedenen Fahrzeugkomponenten zu vernetzen. Beispielsweise werden in vielen Fahrzeugen die Fahrzeugkomponenten über eine sternförmige Netzwerkarchitektur miteinander verbunden, in der ein zentraler Gateway (engl. für Durchgangsstelle) genutzt wird, um die Kommunikation zwischen verschiedenen Komponenten bereitzustellen. Die Kommunikation zwischen den Fahrzeugkomponenten mit Aktoren und Sensoren basiert dabei zumeist auf hardwarenahen Kommunikationsprotokollen, die darauf optimiert sind, eine möglichst kleine Übertragungskapazität und eine möglichst geringe Verarbeitungskapazität zu beanspruchen. Da diese Komponenten meist von Zulieferern stammen, verwenden diese zudem meist ein Kommunikationsprotokoll, das mit einer Vielzahl von Fahrzeugherstellern kompatibel ist und das daher häufig nicht die Möglichkeiten moderner Kommunikationsprotokolle ausschöpft. Auf der anderen Seite stehen Fahrzeugkomponenten, wie etwa Infotainment-Systeme, die über leistungsstarke Prozessoren verfügen und daher in der Lage sind, mit komplexeren Protokollen, die größere Möglichkeiten bieten, umzugehen. Aus den Schriften US 2009/0005916 A1 und US 2013/0297630 A1 sind Datenkonversionssysteme bekannt, die eine grundlegende Konversion zwischen unterschiedlichen Datenformaten, wie sie in Fahrzeugen genutzt werden, unterstützen. Weitergehende Funktionalitäten, wie etwa die Auflösung von Redundanzen, die Unterstützung einer Ende-zu-Ende-Verschlüsselung und einer Ende-zu-Ende-Absicherung werden jedoch nicht unterstützt.

Es besteht der Bedarf nach einem verbesserten Konzept für die Kommunikation innerhalb eines Fahrzeugs, bei dem sowohl den Fähigkeiten der weniger komplexen Aktoren und Sensoren als auch den Fähigkeiten der Fahrzeugkomponenten mit leistungsstarken Prozessoren Rechnung getragen wird.

Ausführungsbeispiele schaffen daher eine Datenvermittlungsvorrichtung für ein Fahrzeug. Diese Datenvermittlungsvorrichtung kann genutzt werden, um zwischen den "einfacheren" Protokollen (die auf zumindest einem ersten Datenformat basieren) der Aktoren/Sensoren und den komplexeren Protokollen (die auf zumindest einem zweiten Datenformat basieren) eine Vermittlung bereitzustellen. Dazu stellt die Datenvermittlungsvorrichtung in einer einfachen Form lediglich eine Zuweisung von Datenäquivalenzen zwischen dem zumindest einen ersten Datenformat und dem zumindest einen zweiten Datenformat bereit. Optional stellt die Datenvermittlungsvorrichtung eine Konvertierung zwischen den beiden Datenformaten bereit, löst Redundanzen innerhalb der Daten auf, hält die Daten zum Abruf bereit oder leistet eine Übertragung von Fehleranzeichen, falls Daten nicht fehlerfrei übertragen werden können.

Ausführungsbeispiele schaffen eine Datenvermittlungsvorrichtung für ein Fahrzeug. Die Vorrichtung umfasst zumindest eine Schnittstelle, ausgebildet zur Kommunikation mit einer ersten Mehrzahl von Fahrzeugkomponenten des Fahrzeugs und zur Kommunikation mit einer zweiten Mehrzahl von Fahrzeugkomponenten des Fahrzeugs. Die Vorrichtung umfasst ferner ein Kontrollmodul, ausgebildet zum Kommunizieren mit der ersten Mehrzahl von Fahrzeugkomponenten des Fahrzeugs basierend auf zumindest einem ersten Datenformat und mit der zweiten Mehrzahl von Fahrzeugkomponenten des Fahrzeugs basierend auf zumindest einem zweiten Datenformat. Das Kontrollmodul ist ausgebildet, um eine Kommunikationsschnittstelle für die Kommunikation zwischen der ersten Mehrzahl von Fahrzeugkomponenten und der zweiten Mehrzahl von Fahrzeugkomponenten bereitzustellen. Das Kontrollmodul ist ausgebildet, um einen Zugriff auf erste Informationen der ersten Mehrzahl von Fahrzeugkomponenten durch Bereitstellen von zweiten Informationen für die zweite Mehrzahl von Fahrzeugkomponenten bereitzustellen, wobei die ersten Informationen auf dem zumindest einen ersten Datenformat basieren, und wobei die zweiten Informationen auf dem zumindest einen zweiten Datenformat basieren. Das Kontrollmodul ist ausgebildet, um zumindest eine redundante Information in den ersten Informationen der ersten Mehrzahl von Fahrzeugkomponenten aufzulösen und damit dritte Informationen zu bilden. Die Datenvermittlungsvorrichtung ist ausgebildet, um, durch Zuordnung der Inhalte der dritten Informationen im ersten Datenformat in das zweite Datenformat und/oder durch Konversion der Inhalte der dritten Informationen im ersten Datenformat in das zweite Datenformat, eine Umsetzung von den dritten Informationen, die im ersten Datenformat vorliegen, in das zweite Datenformat bereitzustellen. Durch das Auflösen der redundanten Information wird ein einheitlicher Zugriff auf die Daten der ersten Mehrzahl von Fahrzeugkomponenten ermöglicht, indem bei Zugriffen durch mehrere Fahrzeugkomponenten der zweiten Mehrzahl von Fahrzeugkomponenten stets die Information der gleichen Quelle oder Quellen der ersten Mehrzahl von Fahrzeugkomponenten bereitgestellt wird.

Durch die Bereitstellung der Kommunikationsschnittstelle wird es der zweiten Mehrzahl von Fahrzeugkomponenten, die basierend auf dem zumindest einen zweiten Datenformat kommunizieren, ermöglicht, Daten der ersten Mehrzahl von Fahrzeugkomponenten, die basierend auf dem zumindest einen ersten Datenformat kommunizieren, zu nutzen oder Funktionen auszulösen. Damit können die Fahrzeugkomponenten der zweiten Mehrzahl von Fahrzeugkomponenten komplexere und mächtigere Protokolle zur Kommunikation nutzen, ohne einen Zugriff auf die erste Mehrzahl von Fahrzeugkomponenten zu verlieren. Das Auflösen der zumindest einen redundanten Information ermöglicht einen einheitlichen Zugriff auf die Daten der ersten Mehrzahl von Fahrzeugkomponenten, da bei Zugriffen durch mehrere Fahrzeugkomponenten der zweiten Mehrzahl stets die Information der gleichen Quelle oder Quellen bereitgestellt wird.

In zumindest einigen Ausführungsbeispielen ist das Kontrollmodul ausgebildet, eine Konvertierung zwischen dem zumindest einen ersten Datenformat und dem zumindest einen zweiten Datenformat für die Kommunikation zwischen der ersten Mehrzahl von Fahrzeugkomponenten und der zweiten Mehrzahl von Fahrzeugkomponenten bereitzustellen. Diese ermöglicht eine Bereitstellung einer universellen Kommunikationsschnittstelle für die zweite Mehrzahl von Fahrzeugkomponenten, unabhängig davon, basierend auf welchen Datentypen und Kommunikationsprotokollen die erste Mehrzahl von Fahrzeugkomponenten kommuniziert.

In manchen Ausführungsbeispielen ist das Kontrollmodul ausgebildet, um eine Ende-zu-Ende-Abgesicherte Kommunikation zwischen einer ersten Fahrzeugkomponente der ersten Mehrzahl von Fahrzeugkomponenten und einer zweiten Fahrzeugkomponente der zweiten Mehrzahl von Fahrzeugkomponenten bereitzustellen. Dies ermöglicht in zumindest manchen Implementierungen eine vertrauenswürdige Kommunikation zwischen Fahrzeugkomponenten der ersten Mehrzahl und Fahrzeugkomponenten der zweiten Mehrzahl von Fahrzeugkomponenten.

Beispielsweise kann das Kontrollmodul ausgebildet sein, um die Ende-zu-Ende-Abgesicherte Kommunikation durch eine Bestimmung von zumindest einem Übertragungsfehler und/oder Weitergabe von Information über den zumindest einen Übertragungsfehler abzusichern. Dies kann es den Fahrzeugkomponenten trotz Kommunikation über die bereitgestellte Kommunikationsschnittstelle ermöglichen, Fehler in der Kommunikation zu erkennen und Fehlerbehandlungsmaßnahmen einzuleiten.

Das Kontrollmodul kann beispielsweise ausgebildet sein, um Fehleranzeichen der auf dem ersten Datenformat basierenden Kommunikation der ersten Mehrzahl von Fahrzeugkomponenten in das zweite Datenformat zu konvertieren und der zweiten Mehrzahl von Fahrzeugkomponenten bereitzustellen. Das Kontrollmodul kann ausgebildet sein, um Fehleranzeichen der auf dem zweiten Datenformat basierenden Kommunikation der zweiten Mehrzahl von Fahrzeugkomponenten in das erste Datenformat zu konvertieren und der ersten Mehrzahl von Fahrzeugkomponenten bereitzustellen. Dies kann es den Fahrzeugkomponenten trotz Kommunikation über die bereitgestellte Kommunikationsschnittstelle ermöglichen, Fehler in der Kommunikation zu erkennen und Fehlerbehandlungsmaßnahmen einzuleiten.

In manchen Ausführungsbeispielen kann zumindest eine Fahrzeugkomponente in der ersten Mehrzahl von Fahrzeugkomponenten und in der zweiten Mehrzahl von Fahrzeugkomponenten umfasst sein. So kann beispielsweise die Datenvermittlungsvorrichtung genutzt werden, um Hilfsfunktionen, etwa die Berechnung von von mehreren Fahrzeugkomponenten genutzten Werten, für eine Vielzahl von Fahrzeugkomponenten bereitzustellen.

Die erste Mehrzahl von Fahrzeugkomponenten kann beispielsweise einer Mehrzahl von Steuergeräten zur Ansteuerung von Fahrzeugsensoren und/oder zur Ansteuerung von Fahrzeugaktoren entsprechen. Die zweite Mehrzahl von Fahrzeugkomponenten kann eine Mehrzahl von Recheneinheiten des Fahrzeugs umfassen. So kann beispielsweise die Datenvermittlungsvorrichtung genutzt werden, um die auf einer Vielzahl von Datenformaten basierenden Daten der Steuergeräte zur Ansteuerung von Fahrzeugsensoren oder -aktoren den Recheneinheiten zur Verfügung zu stellen.

In manchen Ausführungsbeispielen ist das Kontrollmodul ausgebildet, um die Kommunikationsschnittstelle basierend auf einer Konfigurationsinformation bereitzustellen. Das Kontrollmodul kann ferner ausgebildet sein, um eine aktualisierte Konfigurationsinformation zur Erneuerung der Konfigurationsinformation zu erhalten. So kann beispielsweise beim Austausch oder Aktualisieren einer Fahrzeugkomponente (etwa einer Fahrzeugkomponente der ersten Mehrzahl von Fahrzeugkomponenten) lediglich die Konfigurationsinformation der Datenvermittlungsvorrichtung geändert werden, ohne dass eine Anpassung der Konfiguration der zweiten Mehrzahl von Fahrzeugkomponenten notwendig ist.

Das Kontrollmodul kann ausgebildet sein, um die ersten Informationen der ersten Mehrzahl von Fahrzeugkomponenten fortlaufend von der ersten Mehrzahl von Fahrzeugkomponenten zu erhalten, um die zweiten Informationen basierend auf den ersten Informationen zu bestimmen und der zweiten Mehrzahl von Fahrzeugkomponenten bereitzustellen. Dies ermöglicht einen Zugriff auf die zweiten Informationen mit geringen Verzögerungen.

Das Kontrollmodul kann ausgebildet sein, um die ersten Informationen der ersten Mehrzahl von Fahrzeugkomponenten fortlaufend von der ersten Mehrzahl von Fahrzeugkomponenten zu erhalten. Das Kontrollmodul kann ausgebildet sein, um einen Zeitablauf für das Erhalten der ersten Informationen der ersten Mehrzahl von Fahrzeugkomponenten zu bestimmen. So kann beispielsweise verhindert werden, dass eine Fahrzeugkomponente der ersten Mehrzahl ausfällt, ohne dass dies von einer Fahrzeugkomponente der zweiten Mehrzahl erkannt wird, da die Daten weiterhin bereitgestellt würden.

In zumindest einigen Ausführungsbeispielen ist das Kontrollmodul ausgebildet, um die zweiten Informationen über eine objektorientierte Programmierschnittstelle für die zweite Mehrzahl von Fahrzeugkomponenten bereitzustellen. Das zweite Datenformat kann ein objektorientiertes Datenformat sein. Dies ermöglicht einen abstrahierten Zugriff auf die ersten Informationen für die zweite Mehrzahl von Fahrzeugkomponenten.

Ausführungsbeispiele schaffen ferner ein System, umfassend die zuvor beschriebene Datenvermittlungsvorrichtung und eine Vorrichtung für eine Fahrzeugkomponente eines Fahrzeugs. Die Vorrichtung umfasst eine Schnittstelle, ausgebildet zur Kommunikation mit der Datenvermittlungsvorrichtung des Fahrzeugs. Die Vorrichtung umfasst ferner ein Kontrollmodul, das ausgebildet ist, um die Datenvermittlungsvorrichtung zu nutzen, um auf erste Informationen einer ersten Mehrzahl von Fahrzeugkomponenten in Form von zweiten Informationen, die auf einem zweiten Datenformat basieren, zuzugreifen, wobei der Zugriff über die Datenvermittlungsvorrichtung geschieht und wobei die ersten Informationen auf einem ersten Datenformat basieren. Durch die Datenvermittlungsvorrichtung wurde zumindest eine redundante Information in den ersten Informationen der ersten Mehrzahl von Fahrzeugkomponenten aufgelöst, womit dritte Informationen gebildet wurden. Durch die Datenvermittlungsvorrichtung wurde eine Umsetzung von den dritten Informationen, die im ersten Datenformat vorliegen, in das zweite Datenformat durchgeführt. Dies ermöglicht es der Fahrzeugkomponente, auf die Informationen der ersten Mehrzahl von Fahrzeugkomponenten zuzugreifen, ohne deren Datenformate beherrschen zu müssen, was einen flexiblen Austausch dieser Fahrzeugkomponenten ermöglicht.

Ausführungsbeispiele schaffen ferner ein Datenvermittlungsverfahren für ein Fahrzeug. Das Verfahren umfasst Kommunizieren mit einer ersten Mehrzahl von Fahrzeugkomponenten des Fahrzeugs basierend auf zumindest einem ersten Datenformat. Das Verfahren umfasst ferner Kommunizieren mit einer zweiten Mehrzahl von Fahrzeugkomponenten des Fahrzeugs basierend auf zumindest einem zweiten Datenformat. Das Verfahren umfasst ferner Bereitstellen einer Kommunikationsschnittstelle für die Kommunikation zwischen der ersten Mehrzahl von Fahrzeugkomponenten und der zweiten Mehrzahl von Fahrzeugkomponenten. Das Bereitstellen der Kommunikationsschnittstelle umfasst, einen Zugriff auf erste Informationen der ersten Mehrzahl von Fahrzeugkomponenten durch Bereitstellen von zweiten Informationen für die zweite Mehrzahl von Fahrzeugkomponenten bereitzustellen. Die ersten Informationen basieren auf dem zumindest einen ersten Datenformat. Die zweiten Informationen basieren auf dem zumindest einen zweiten Datenformat. Das Verfahren umfasst des Weiteren, dass zumindest eine redundante Information in den ersten Informationen der ersten Mehrzahl von Fahrzeugkomponenten aufgelöst wird und damit dritte Informationen gebildet werden. Das Datenvermittlungsverfahren ist dazu vorgesehen, um, durch Zuordnung der Inhalte der dritten Informationen im ersten Datenformat in das zweite Datenformat und/oder durch Konversion der Inhalte der dritten Informationen im ersten Datenformat in das zweite Datenformat, eine Umsetzung von den dritten Informationen, die im ersten Datenformat vorliegen, in das zweite Datenformat bereitzustellen, sodass durch das Auflösen der redundanten Information ein einheitlicher Zugriff auf die Daten der ersten Mehrzahl von Fahrzeugkomponenten ermöglicht wird, indem bei Zugriffen durch mehrere Fahrzeugkomponenten der zweiten Mehrzahl von Fahrzeugkomponenten stets die Information der gleichen Quelle oder Quellen der ersten Mehrzahl von Fahrzeugkomponenten bereitgestellt wird.

Die Schritte des zuvor vorgestellten Datenvermittlungsverfahren werden durch eine Datenvermittlungsvorrichtung ausgeführt. In manchen Fällen umfasst das Verfahren ferner folgende Schritte, die von einer Fahrzeugkomponente des Fahrzeugs ausgeführt werden. Das Verfahren umfasst in diesem Fall ferner Kommunizieren mit der Datenvermittlungsvorrichtung des Fahrzeugs. Das Verfahren umfasst in diesem Fall ferner Nutzen der Datenvermittlungsvorrichtung, um auf erste Informationen einer ersten Mehrzahl von Fahrzeugkomponenten über die Datenvermittlungsvorrichtung in Form von zweiten Informationen, die auf einem zweiten Datenformat basieren, zuzugreifen, wobei die ersten Informationen auf einem ersten Datenformat basieren, wobei zumindest eine redundante Information in den ersten Informationen der ersten Mehrzahl von Fahrzeugkomponenten durch die Datenvermittlungsvorrichtung aufgelöst wurde und damit dritte Informationen gebildet wurden, wobei durch die Datenvermittlungsvorrichtung eine Umsetzung von den dritten Informationen, die im ersten Datenformat vorliegen, in das zweite Datenformat durchgeführt wurde.

Ausführungsbeispiele schaffen ferner ein Programm mit einem Programmcode zum Durchführen des Datenvermittlungsverfahrens, wenn der Programmcode auf einem Computer, einem Prozessor, einem Controller oder einer programmierbaren Hardwarekomponente ausgeführt wird.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fig. 1a: zeigt ein Blockdiagramm eines Ausführungsbeispiels einer Datenvermittlungsvorrichtung;
- Fig. 1b: zeigt ein Flussdiagramm eines Ausführungsbeispiels eines Datenvermittlungsverfahrens;
- Fig. 2a: zeigt ein Blockdiagramm einer Vorrichtung für eine Fahrzeugkomponente;
- Fig. 2b: zeigt ein Flussdiagramm eines Ausführungsbeispiels eines Verfahrens für eine Fahrzeugkomponente;
- Fign. 3a bis 3c: zeigen schematische Diagramme einer Kommunikation zwischen Fahrzeugkomponenten eines Fahrzeugs;
- Fig. 4: zeigt eine Systemübersicht eines beispielhaften Kommunikationsservers;
- Fign. 5a bis 5h: zeigen beispielhafte Datenmodelle einer serviceorientierten Kommunikation; und
- Fig. 6: zeigt ein schematisches Diagramm einer Kommunikation zwischen Fahrzeugkomponenten und einem Kommunikationsserver.

Verschiedene Ausführungsbeispiele werden nun ausführlicher unter Bezugnahme auf die beiliegenden Zeichnungen beschrieben, in denen einige Ausführungsbeispiele dargestellt sind.

In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer," "eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

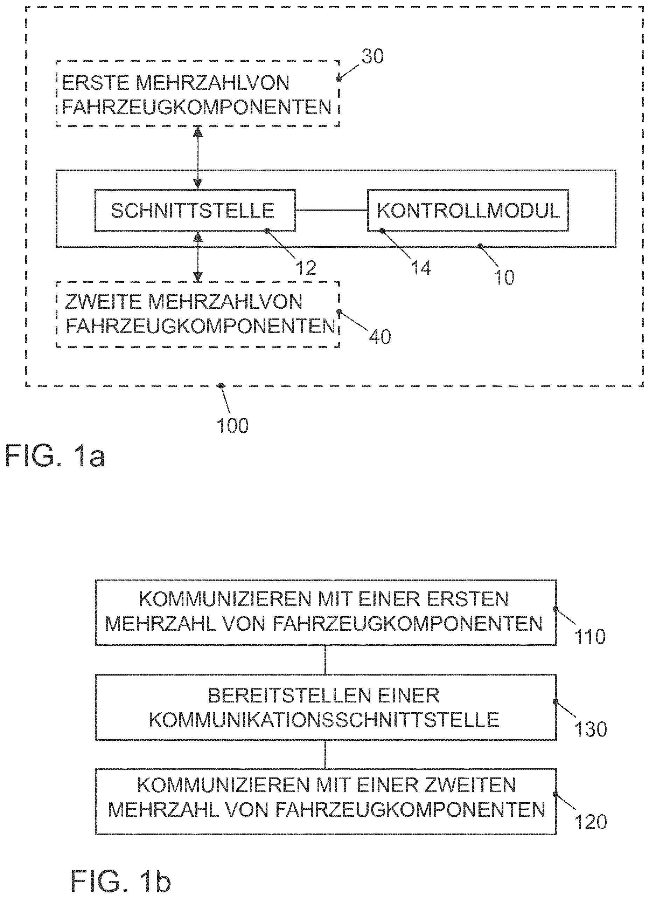

Fig. 1a zeigt ein Blockdiagramm einer Datenvermittlungsvorrichtung 10 für ein Fahrzeug 100. Fig. 1a zeigt ferner das Fahrzeug 100 mit der Datenvermittlungsvorrichtung 10, einer ersten Mehrzahl von Fahrzeugkomponenten 30 und einer zweiten Mehrzahl von Fahrzeugkomponenten 40. Die Datenvermittlungsvorrichtung 10 umfasst zumindest eine Schnittstelle 12, ausgebildet zur Kommunikation mit der ersten Mehrzahl von Fahrzeugkomponenten 30 des Fahrzeugs 100 und zur Kommunikation mit der zweiten Mehrzahl von Fahrzeugkomponenten 40 des Fahrzeugs 100. Die Datenvermittlungsvorrichtung umfasst ferner ein Kontrollmodul 14, ausgebildet zum Kommunizieren mit der ersten Mehrzahl von Fahrzeugkomponenten des Fahrzeugs basierend auf zumindest einem ersten Datenformat und mit der zweiten Mehrzahl von Fahrzeugkomponenten des Fahrzeugs basierend auf zumindest einem zweiten Datenformat. Das Kontrollmodul 14 ist ausgebildet, um eine Kommunikationsschnittstelle für die Kommunikation zwischen der ersten Mehrzahl von Fahrzeugkomponenten und der zweiten Mehrzahl von Fahrzeugkomponenten bereitzustellen. Das Kontrollmodul 14 ist ausgebildet, um einen Zugriff auf erste Informationen der ersten Mehrzahl von Fahrzeugkomponenten durch Bereitstellen von zweiten Informationen für die zweite Mehrzahl von Fahrzeugkomponenten bereitzustellen. Die ersten Informationen basieren auf dem zumindest einen ersten Datenformat. Die zweiten Informationen basieren auf dem zumindest einen zweiten Datenformat. Die zumindest eine Schnittstelle ist mit dem Kontrollmodul 14 gekoppelt.

Fig. 1b zeigt ein Flussdiagramm eines (entsprechenden) Datenvermittlungsverfahrens für ein Fahrzeug 100. Das Datenvermittlungsverfahren umfasst Kommunizieren 110 mit einer ersten Mehrzahl von Fahrzeugkomponenten des Fahrzeugs basierend auf zumindest einem ersten Datenformat. Das Datenvermittlungsverfahren umfasst Kommunizieren 120 mit einer zweiten Mehrzahl von Fahrzeugkomponenten des Fahrzeugs basierend auf zumindest einem zweiten Datenformat. Das Datenvermittlungsverfahren umfasst Bereitstellen 130 einer Kommunikationsschnittstelle für die Kommunikation zwischen der ersten Mehrzahl von Fahrzeugkomponenten und der zweiten Mehrzahl von Fahrzeugkomponenten. Das Bereitstellen 130 der Kommunikationsschnittstelle umfasst, einen Zugriff auf erste Informationen der ersten Mehrzahl von Fahrzeugkomponenten durch Bereitstellen von zweiten Informationen für die zweite Mehrzahl von Fahrzeugkomponenten bereitzustellen. Das Verfahren kann beispielsweise von der Datenvermittlungsvorrichtung und/oder von einer Recheneinheit des Fahrzeugs ausgeführt werden.

Die folgende Beschreibung bezieht sich sowohl auf die Datenvermittlungsvorrichtung als auch auf das Datenvermittlungsverfahren. Funktionale Fähigkeiten des Kontrollmoduls und der zumindest einen Schnittstelle entsprechen dabei den Verfahrensschritten des Datenvermittlungsverfahrens.

Ausführungsbeispiele basieren darauf, dass die Datenvermittlungsvorrichtung 10 genutzt wird, um eine (vereinfachte) Kommunikation zwischen der ersten Mehrzahl und der zweiten Mehrzahl von Fahrzeugkomponenten bereitzustellen. Dabei ist die Datenvermittlungsvorrichtung 10 ausgebildet, um eine Umsetzung von den ersten Informationen, die im ersten Datenformat vorliegen, in das zweite Datenformat bereitzustellen, etwa durch Zuordnung der Inhalte der ersten Informationen im ersten Datenformat in das zweite Datenformat und/oder durch Konversion der Inhalte der ersten Informationen im ersten Datenformat in das zweite Datenformat. Die Datenvermittlungsvorrichtung kann etwa einer Fahrzeug-Datenvermittlungsvorrichtung entsprechen. Die Verfahrensschritte des Datenvermittlungsverfahrens können durch eine Fahrzeug-Datenvermittlungsvorrichtung (innerhalb eines Fahrzeugs) ausgeführt werden.

Dabei ist das Kontrollmodul 14, über die zumindest eine Schnittstelle 12, dazu ausgebildet, um mit der ersten Mehrzahl und mit der zweiten Mehrzahl von Fahrzeugkomponenten zu kommunizieren. Dazu kann beispielsweise die zumindest eine Schnittstelle 12 ausgebildet sein, über das gleiche Kommunikationsnetzwerk, etwa über Ethernet, mit der ersten Mehrzahl von Fahrzeugkomponenten und mit der zweiten Mehrzahl von Fahrzeugkomponenten zu kommunizieren. Beispielsweise kann die Kommunikation des Kontrollmoduls 14 und/oder der Schnittstelle 12 mit der ersten und der zweiten Mehrzahl von Fahrzeugkomponenten auf dem gleichen Kommunikationsnetzwerk, etwa einem Ethernet-basierten Netzwerk, basieren. Alternativ kann die zumindest eine Schnittstelle 12 ausgebildet sein, über unterschiedliche Kommunikationsnetzwerke mit der ersten Mehrzahl von Fahrzeugkomponenten und mit der zweiten Mehrzahl von Fahrzeugkomponenten zu kommunizieren, etwa über zumindest ein erstes Kommunikationsnetzwerk mit der ersten Mehrzahl von Fahrzeugkomponenten und über ein zweites Kommunikationsnetzwerk mit der zweiten Mehrzahl von Fahrzeugkomponenten. Das zumindest eine erste Kommunikationsnetzwerk kann etwa einem Kontroll-Netzwerk-Bus (auch engl. Controller Area Network Bus, CAN Bus) und/oder einem lokalen Verbindungsnetzwerk (auch engl. Local Interconnect Network, LIN) entsprechen. Das zweite Kommunikationsnetzwerk kann etwa einem Ethernet-basierten Netzwerk entsprechen.

Die erste Mehrzahl von Fahrzeugkomponenten kann beispielsweise einer Mehrzahl von Steuergeräten zur Ansteuerung von Fahrzeugsensoren und/oder zur Ansteuerung von Fahrzeugaktoren entsprechen. Beispielsweise kann die erste Mehrzahl von Steuergeräten einer Mehrzahl von Mikrochips entsprechen, die ausgebildet sind, um je für lediglich eine Fahrzeugkomponente eine Steuerung und/oder eine Kommunikation bereitzustellen. Beispielsweise können die erste Mehrzahl von Fahrzeugkomponenten eine Mehrzahl von Steuergeräten, etwa eines Antriebssystems des Fahrzeugs, umfassen oder diesen entsprechen. Die Mehrzahl von Steuergeräten kann beispielsweise eine geringere Rechenkapazität aufweisen als eine Mehrzahl von Recheneinheiten des Fahrzeugs 100, die der zweiten Mehrzahl von Fahrzeugkomponenten des Fahrzeugs entsprechen können.

Beispielsweise kann die zweite Mehrzahl von Fahrzeugkomponenten eine Mehrzahl von Recheneinheiten des Fahrzeugs 100 umfassen. Die zweite Mehrzahl von Fahrzeugkomponenten können beispielsweise software-basierte Fahrzeugkomponenten des Fahrzeugs sein, etwa Steuergeräte oder Fahrzeugfunktionalitäten, die gesammelt auf der Mehrzahl von Recheneinheiten des Fahrzeugs 100 ausgeführt werden. Beispielsweise können die zweite Mehrzahl von Fahrzeugkomponenten die Recheneinheiten sein, oder die softwarebasierten Fahrzeugkomponenten, die durch die Recheneinheiten ausgeführt werden. In zumindest manchen Ausführungsbeispielen ist die erste Mehrzahl von Fahrzeugkomponenten durch dedizierte Anwendungsspezifische Mikrochips implementiert und die zweite Mehrzahl von Fahrzeugkomponenten durch Software implementiert, die dazu ausgelegt ist, durch eine zentrale Recheneinheit des Fahrzeugs ausgeführt zu werden. In manchen Ausführungsbeispielen kann zumindest eine Fahrzeugkomponente in der ersten Mehrzahl von Fahrzeugkomponenten und in der zweiten Mehrzahl von Fahrzeugkomponenten umfasst sein. So kann beispielsweise eine softwarebasierte Fahrzeugkomponente sowohl in der ersten Mehrzahl von Fahrzeugkomponenten umfasst sein, um Hilfsfunktionen für andere Fahrzeugkomponenten der zweiten Mehrzahl von Fahrzeugkomponenten bereitzustellen, als auch in der zweiten Mehrzahl von Fahrzeugkomponenten, um erste Informationen der ersten Mehrzahl von Fahrzeugkomponenten nutzen zu können.

Das Kontrollmodul ist ausgebildet, um basierend auf dem zumindest einen ersten Datenformat mit der ersten Mehrzahl von Fahrzeugkomponenten zu kommunizieren und basierend auf dem zumindest einen zweiten Datenformat mit der zweiten Mehrzahl von Fahrzeugkomponenten. Die ersten Informationen basieren auf dem zumindest einen ersten Datenformat. Die zweiten Informationen basieren auf dem zumindest einen zweiten Datenformat. Beispielsweise kann das ersten Datenformat eine geringere Nachrichtengröße ergeben als das zweite Datenformat. Beispielsweise kann das erste Datenformat darauf basieren, dass die zu übertragenden Informationen eine fixe Anordnung, etwa eine fixe Bit-Stelle, innerhalb des Datenformats haben. So können Daten, die über das erste Datenformat übertragen werden, Datentypen nutzen, die ausreichend groß sind für die zu übertragenden Daten, aber nicht einem Vielfachen von 8 oder 16 Bit entsprechen: Sind lediglich 64 verschiedene Werte vorgesehen, so können für manche Daten etwa lediglich 6 Bit vorgesehen sein. Im Gegensatz dazu kann das zumindest eine zweite Datenformat auf Datentypen basieren, die auf einem Vielfachen von 8 Bit (oder 16 Bit, 32 Bit) basieren. Beispielsweise können alle Datentypen des zumindest einen zweiten Datenformats ein Vielfaches von 8 Bit aufweisen. Solche Datentypen können beispielsweise die Datentypen "integer" (ganzzahlige Zahl), "float", "double" (Gleitkommazahlen mit einer Genauigkeit von 32 Bit (float) bzw. 64 Bit (double)), "enum" (Aufzählungstyp) oder "boolean" (binärer Datentyp mit den Werten Wahr oder Falsch) sein. Beispielsweise kann das zweite Datenformat ein objektorientiertes Datenformat sein. Das zweite Datenformat kann auf strukturierten Textdaten basieren, etwa ähnlich implementiert sein wie die erweiterbare Markup-Sprache (eXtensible Markup Language, XML) oder die JavaScript Object Notation (JSON, JaveScript Objektnotierung). In zumindest manchen Ausführungsbeispielen entspricht die Kommunikation über das erste Datenformat einer Signalkommunikation und die Kommunikation über das zweite Datenformat einer Dienste/Service-orientierten Kommunikation. In zumindest einigen Ausführungsbeispielen basiert das zweite Datenformat auf dem SomelP (Scalable service-Oriented MiddlewarE over IP, skalierbare Service-orientierte Zwischenschicht über das Internetprotokoll) oder auf dem ViWi (Volkswagen Infotainment Web Interface)-Protokoll.

Das Kontrollmodul 14 ist ausgebildet, um die Kommunikationsschnittstelle für die Kommunikation zwischen der ersten Mehrzahl von Fahrzeugkomponenten und der zweiten Mehrzahl von Fahrzeugkomponenten bereitzustellen. Die Kommunikationsschnittstelle kann beispielsweise dazu ausgebildet sein, die zweiten Informationen für die zweite Mehrzahl von Fahrzeugkomponenten zum Abruf bereitzustellen und/oder die zweiten Informationen der zweiten Mehrzahl von Fahrzeugkomponenten (proaktiv) zu übermitteln. Das Kontrollmodul 14 kann ausgebildet sein, um die ersten Informationen der ersten Mehrzahl von Fahrzeugkomponenten fortlaufend (etwa periodisch oder Ereignisbasiert) von der ersten Mehrzahl von Fahrzeugkomponenten zu erhalten (etwa zu empfangen oder abzurufen), um die zweiten Informationen basierend auf den ersten Informationen zu bestimmen und der zweiten Mehrzahl von Fahrzeugkomponenten bereitzustellen. Die Kommunikationsschnittstelle kann dazu ausgebildet sein, um die ersten Informationen (periodisch oder ereignisbasiert) von der ersten Mehrzahl von Fahrzeugkomponenten abzurufen oder die ersten Informationen von der ersten Mehrzahl von Fahrzeugkomponenten zu empfangen, sobald die erste Mehrzahl von Fahrzeugkomponenten die ersten Informationen bereitstellen. In zumindest manchen Ausführungsbeispielen ist das Kontrollmodul 14 ferner ausgebildet, um die ersten Informationen und/oder die zweiten Informationen zwischenzuspeichern, etwa in einem Speichermodul. Die Datenvermittlungsvorrichtung kann beispielsweise das Speichermodul umfassen.

In zumindest manchen Ausführungsbeispielen kann das Kontrollmodul 14 ferner ausgebildet sein, um die ersten Informationen der ersten Mehrzahl von Fahrzeugkomponenten fortlaufend (etwa periodisch oder ereignisbasiert) von der ersten Mehrzahl von Fahrzeugkomponenten zu erhalten (etwa zu empfangen oder abzurufen), wobei das Kontrollmodul 14 ausgebildet ist, um einen Zeitablauf (auch engl. Timeout) für das Erhalten der ersten Informationen der ersten Mehrzahl von Fahrzeugkomponenten zu bestimmen. Beispielsweise kann das Kontrollmodul 14 ausgebildet sein, um eine Fehlerbenachrichtigung und/oder ein Fehleranzeichen für die zweite Mehrzahl von Fahrzeugkomponenten bereitzustellen, falls ein Zeitablauf für das Erhalten der ersten Informationen der ersten Mehrzahl von Fahrzeugkomponenten bestimmt wurde. Alternativ oder zusätzlich kann das Kontrollmodul 14 ausgebildet sein, um einen Fehlerwert oder einen Null-Wert bei Bereitstellen der zweiten Information, die der ersten Information entspricht, auszugeben, falls der Zeitablauf für das Erhalten der ersten Informationen der ersten Mehrzahl von Fahrzeugkomponenten bestimmt wurde.

In zumindest einigen Ausführungsbeispielen basieren die zweiten Informationen auf den ersten Informationen. Beispielsweise kann ein Inhalt der zweiten Informationen einem Inhalt der ersten Informationen entsprechen oder auf dem Inhalt der ersten Informationen basieren. Die zweiten Informationen können einer verarbeiteten, etwa einer sortierten, gefilterten und/oder konvertierten, Fassung der ersten Informationen entsprechen. Beispielsweise kann das Kontrollmodul 14 ausgebildet sein, um die zweiten Informationen über eine objektorientierte Programmierschnittstelle für die zweite Mehrzahl von Fahrzeugkomponenten bereitzustellen. Beispielsweise kann das Kontrollmodul 14 ausgebildet sein, um durch Bereitstellen der zweiten Informationen über die objektorientierte Programmierschnittstelle der zweiten Mehrzahl von Fahrzeugkomponenten die Inhalte und/oder Funktionalitäten der ersten Informationen bereitzustellen. Dabei können Inhalte etwa Werte sein, etwa Sensorwerte oder Statusinformationen der ersten Mehrzahl von Fahrzeugkomponenten, und Funktionalitäten können die Möglichkeit darstellen, eine Funktionalität einer Fahrzeugkomponente der ersten Mehrzahl von Fahrzeugkomponenten auszulösen. Beispielsweise können die zweiten Informationen dazu ausgelegt sein, über Abfrage-Zugriffsfunktionen (auch engl. accessor methods) Inhalte der ersten Informationen bereitstellen und über Objekt-Methoden einen Zugriff auf Funktionalitäten der ersten Mehrzahl von Fahrzeugkomponenten bereitzustellen.

In zumindest manchen Ausführungsbeispielen ist das Kontrollmodul 14 ferner ausgebildet, um eine Konvertierung zwischen dem zumindest einen ersten Datenformat und dem zumindest einen zweiten Datenformat für die Kommunikation zwischen der ersten Mehrzahl von Fahrzeugkomponenten und der zweiten Mehrzahl von Fahrzeugkomponenten bereitzustellen. Beispielsweise kann das Kontrollmodul 14 ausgebildet sein, um eine Konvertierung zwischen Datentypen des zumindest einen ersten Datenformats und Datentypen des zumindest einen zweiten Datenformats bereitzustellen. Das Kontrollmodul 14 kann ausgebildet sein, um eine Konvertierung zwischen einer Auffrischgeschwindigkeit (auch engl. Refresh Rate) des ersten Datenformats und einer Auffrischgeschwindigkeit des ersten Datenformats bereitzustellen. In zumindest manchen Ausführungsbeispielen kann das Kontrollmodul 14 ausgebildet sein, um zwischen dem ersten Datenformat und dem zweiten Datenformat eine Konvertierung zwischen einer ereignisbasierten Kommunikation und einer periodischen Kommunikation (und umgekehrt) bereitzustellen. In zumindest einigen Ausführungsbeispielen sind das zumindest eine erste Datenformat und das zumindest eine zweite Datenformat unterschiedlich.

Beispielsweise kann das Kontrollmodul 14 ferner ausgebildet sein, um zumindest eine redundante Information in den ersten Informationen der ersten Mehrzahl von Fahrzeugkomponenten aufzulösen. Beispielsweise kann das Kontrollmodul 14 ausgebildet sein, um eine Information der zweiten Informationen basierend auf zumindest zwei redundanten Informationen der ersten Informationen zu bestimmen, etwa basierend auf einer Auswahl der Information aus den zwei redundanten Informationen, basierend auf einem Mittelwert, kombinierten Wert oder einem interpolierten Wert der zwei redundanten Informationen, oder basierend auf einer sonstigen Konversion der zwei redundanten Informationen.

In manchen Ausführungsbeispielen ist das Kontrollmodul ausgebildet, um eine Ende-zu-Ende-Abgesicherte Kommunikation zwischen einer ersten Fahrzeugkomponente der ersten Mehrzahl von Fahrzeugkomponenten und einer zweiten Fahrzeugkomponente der zweiten Mehrzahl von Fahrzeugkomponenten bereitzustellen. Beispielsweise kann sich das Absichern der Kommunikation auf eine Erkennung von Übertragungsfehlern beziehen. Das Kontrollmodul 14 kann ausgebildet sein, um Übertragungsfehler in der Kommunikation zwischen der ersten Fahrzeugkomponente und der zweiten Fahrzeugkomponente der ersten und/oder der zweiten Fahrzeugkomponente mitzuteilen und/oder weiterzuleiten. Das Kontrollmodul 14 kann etwa ausgebildet sein, um die Ende-zu-Ende-Abgesicherte Kommunikation durch eine Bestimmung von zumindest einem Übertragungsfehler und/oder Weitergabe von Information über den zumindest einen Übertragungsfehler abzusichern. Die Übertragungsfehler können dann der ersten und/oder der zweiten Fahrzeugkomponente mitgeteilt, übertragen oder angezeigt werden. Beispielsweise kann das Kontrollmodul 14 ausgebildet sein, um Fehleranzeichen der auf dem ersten Datenformat basierenden Kommunikation der ersten Mehrzahl von Fahrzeugkomponenten in das zweite Datenformat zu konvertieren und der zweiten Mehrzahl von Fahrzeugkomponenten bereitzustellen. Das Kontrollmodul 14 kann ausgebildet sein, um Fehleranzeichen der auf dem zweiten Datenformat basierenden Kommunikation der zweiten Mehrzahl von Fahrzeugkomponenten in das erste Datenformat zu konvertieren und der ersten Mehrzahl von Fahrzeugkomponenten bereitzustellen.

Das Kontrollmodul 14 kann ausgebildet sein, um die Kommunikationsschnittstelle basierend auf einer Konfigurationsinformation bereitzustellen. Beispielsweise kann die Konfigurationsinformation zumindest ein Element der Gruppe von Informationen über eine (gegenseitige) Entsprechung von Informationen der ersten Informationen zu Informationen der zweiten Informationen, Konversionsregeln für die Konvertierung zwischen dem zumindest einen ersten Datenformat und dem zumindest einen zweiten Datenformat, Regeln über die Auflösung der zumindest einen Redundanz, und Regeln über die Bestimmung von Übertragungsfehler umfassen. Das Kontrollmodul 14 kann ausgebildet sein, um eine aktualisierte Konfigurationsinformation zur Erneuerung der Konfigurationsinformation zu erhalten. Das Kontrollmodul 14 kann nach Erneuerung der Konfigurationsinformation ausgebildet sein, um die Kommunikationsschnittstelle basierend auf der aktualisierten Konfigurationsinformation bereitzustellen.

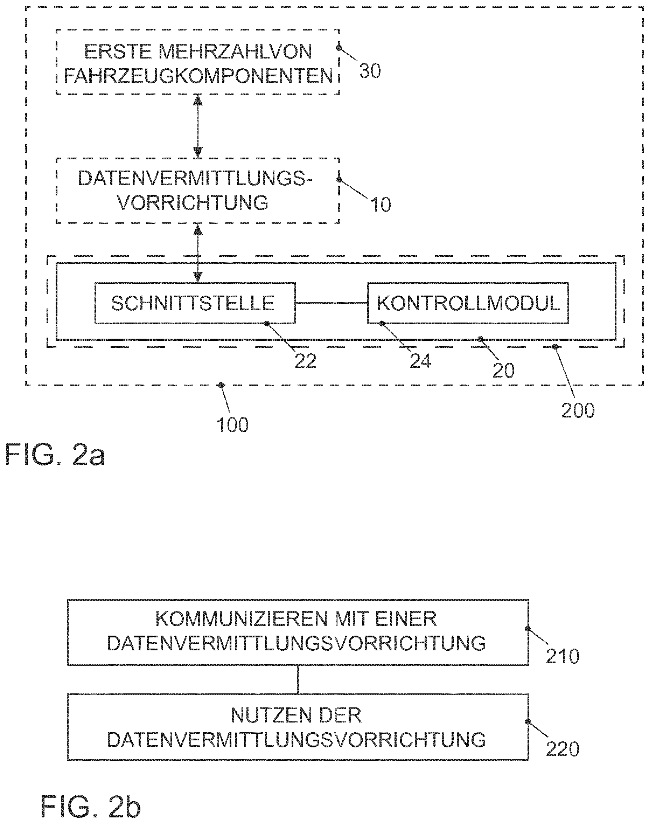

In Ausführungsbeispielen kann die das Kontrollmodul 14 (und/oder ein Kontrollmodul 24, wie es in Zusammenhang mit Fig. 2a eingeführt wird) einem beliebigen Controller oder Prozessor oder einer programmierbaren Hardwarekomponente entsprechen. Beispielsweise kann das Kontrollmodul 14; 24 auch als Software realisiert sein, die für eine entsprechende Hardwarekomponente programmiert ist. Insofern kann das Kontrollmodul 14; 24 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 14; 24 denkbar.

Die zumindest eine Schnittstelle 12 (und/oder zumindest eine Schnittstelle 22, wie sie in Zusammenhang mit Fig. 2a eingeführt wird) kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten. Die zumindest eine Schnittstelle 12; 22 kann ausgebildet sein, um über ein fahrzeuginternes Netzwerk zu kommunizieren. Die Kommunikation zwischen der ersten Mehrzahl von Fahrzeugkomponenten, der Datenvermittlungsvorrichtung und/oder der zweiten Mehrzahl von Fahrzeugkomponenten kann fahrzeugintern stattfinden.

In zumindest manchen Ausführungsbeispielen könnte das Fahrzeug 100 beispielsweise einem Landfahrzeug, einem Wasserfahrzeug, einem Luftfahrzeug, einem Schienenfahrzeug, einem Straßenfahrzeug, einem Auto, einem Geländefahrzeug, einem Kraftfahrzeug, oder einem Lastkraftfahrzeug entsprechen.

Das Speichermodul kann beispielsweise zumindest ein Element der Gruppe von computerlesbares Speichermedium, magnetisches Speichermedium, optisches Speichermedium, Festplatte, Flash-Speicher, Diskette, Zufallszugriffsspeicher (auch engl. Random Access Memory), Programmable Read Only Memory (PROM), Erasable Programmable Read Only Memory (EPROM), Electronically Erasable Programmable Read Only Memory (EEPROM), und Netzwerkspeicher umfassen.

Mehr Details und Aspekte der Datenvermittlungsvorrichtung 10 und/oder des Datenvermittlungsverfahrens werden in Verbindung mit dem Konzept oder Beispielen genannt, die vorher oder nachher (z.B. Fig. 2a bis 6) beschrieben werden. Die Datenvermittlungsvorrichtung 10 und/oder das Datenvermittlungsverfahren kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Fig. 2a zeigt ein Blockdiagramm eines Ausführungsbeispiels einer Vorrichtung 20 für eine Fahrzeugkomponente 200 eines Fahrzeugs 100. Fig. 2a zeigt ferner die Fahrzeugkomponente 200 mit der Vorrichtung 20, und das Fahrzeug 100 mit der Fahrzeugkomponente 200 mit der Vorrichtung 20, mit der Datenvermittlungsvorrichtung 10 und mit der ersten Mehrzahl von Fahrzeugkomponenten. Die Vorrichtung 20 umfasst eine Schnittstelle 22, ausgebildet zur Kommunikation mit einer Datenvermittlungsvorrichtung 10 des Fahrzeugs 100. Die Datenvermittlungsvorrichtung 10 kann etwa der Datenvermittlungsvorrichtung entsprechen, wie sie in Zusammenhang mit Fig. 1a eingeführt wurde. Die Fahrzeugkomponente kann etwa eine Fahrzeugkomponente der zweiten Mehrzahl von Fahrzeugkomponenten sein. Die Vorrichtung 20 umfasst ferner ein Kontrollmodul 24, das ausgebildet ist, um die Datenvermittlungsvorrichtung 10 zu nutzen, um auf erste Informationen einer ersten Mehrzahl von Fahrzeugkomponentenüber die Datenvermittlungsvorrichtung 10 in Form von zweiten Informationen, die auf einem zweiten Datenformat basieren, zuzugreifen, wobei die ersten Informationen auf einem ersten Datenformat basieren. Die zumindest eine Schnittstelle 22 ist mit dem Kontrollmodul 24 gekoppelt.

Fig. 2a zeigt ein Flussdiagramm eines Ausführungsbeispiels eines entsprechenden Verfahrens für die Fahrzeugkomponente des Fahrzeugs. Die Verfahrensschritte können beispielsweise durch die Fahrzeugkomponente ausgeführt werden, etwa durch ein Kontrollmodul der Fahrzeugkomponente. Das Verfahren umfasst Kommunizieren 210 mit einer Datenvermittlungsvorrichtung 10 des Fahrzeugs 100. Das Verfahren umfasst ferner Nutzen 220 der Datenvermittlungsvorrichtung 10, um auf erste Informationen einer ersten Mehrzahl von Fahrzeugkomponenten über die Datenvermittlungsvorrichtung 10 in Form von zweiten Informationen, die auf einem zweiten Datenformat basieren, zuzugreifen, wobei die ersten Informationen auf einem ersten Datenformat basieren. Das Verfahren kann beispielsweise von der Fahrzeugkomponente, etwa von einem Kontrollmodul der Fahrzeugkomponente, ausgeführt werden.

Die folgende Beschreibung bezieht sich sowohl auf die Vorrichtung als auch auf das Verfahren. Funktionale Fähigkeiten des Kontrollmoduls und der zumindest einen Schnittstelle entsprechen dabei den Verfahrensschritten des Verfahrens.

Das Kontrollmodul 24 ist ausgebildet, um Datenvermittlungsvorrichtung 10 zu nutzen, um auf erste Informationen einer ersten Mehrzahl von Fahrzeugkomponentenüber die Datenvermittlungsvorrichtung 10 in Form von zweiten Informationen zuzugreifen. Beispielsweise kann das Kontrollmodul 24 ausgebildet sein, um die zweiten Informationen von der Datenvermittlungsvorrichtung 10 abzurufen oder die zweiten Informationen von der Datenvermittlungsvorrichtung 10 zu empfangen. Das Kontrollmodul 24 kann ausgebildet sein, um die ersten Informationen aus den zweiten Informationen zu extrahieren oder um die ersten Informationen aus den zweiten Informationen abzuleiten. Beispielsweise können die zweiten Informationen den Inhalt der ersten Informationen umfassen und/oder eine Funktionalität der ersten Informationen bereitstellen. Das Kontrollmodul kann ausgebildet sein, um auf den Inhalt und/oder die Funktionalität der ersten Informationen über die zweiten Informationen zuzugreifen.

Mehr Details und Aspekte der Vorrichtung 20 und/oder des Verfahrens werden in Verbindung mit dem Konzept oder Beispielen genannt, die vorher oder nachher (z.B. Fig. 1a bis 2a, 3a bis 6) beschrieben werden. Die Vorrichtung 20 und/oder das Verfahren kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Zumindest manche Ausführungsbeispiele schaffen einen Kommunikationsserver. Der Kommunikationsserver, und die Kommunikationsserver, die im Folgenden vorgestellt werden, können beispielsweise der Datenvermittlungsvorrichtung 10, wie sie in Zusammenhang mit den Fign. 1a bis 2b eingeführt wird, entsprechen oder diese umfassen. Ausführungsbeispiele des Kommunikationsservers stellen eine Umsetzung von einer Signal-basierte Kommunikation auf eine Service-orientierte Kommunikation in einer verteilten Automotive E/E-Architektur (Ende-zu-Ende Architektur im Fahrzeugbereich) bereit.

In manchen Systemen stellt ein Gateway im Fahrzeug Funktionen über statische Schnittstellen Daten der Fahrzeugvernetzung zur Verfügung. Dies bietet den Nachteil, dass die Daten statisch festgelegt sind und keine Abstraktion der Fahrzeugvernetzung von Funktionsebene stattfindet. Dies kann nachteilig sein für eine Update/Upgradefähigkeit (Aktualisierung/Aufrüstungsfähigkeit) und Verschiebbarkeit von Funktionen.

Ausführungsbeispiele stellen daher einen In Car Application Server (ICAS, Anwendungsserver im Fahrzeug) mit Kommunikationsserver bereit, der statische CAN Signale als Service aufbereitet, über die auf Funktionen (Applikationen) dynamisch zugegriffen werden kann und der verschiedene Funktionen nutzen kann über Service Discovery (Diensterkennung im Netzwerk).

Ausführungsbeispiele verfolgen dabei einen generischen Ansatz, der anwendungsfallunabhängig ist. Der Kommunikationsserver, der beispielsweise der Datenvermittlungsvorrichtung entsprechen kann, kann Service-Kommunikation (Dienste-Kommunikation) aus mehreren Signalquellen (physikalische Busse/Netzwerke und Kommunikations-Protokolle) bereitstellen und umgekehrt. Zumindest manche Ausführungsbeispiele des Kommunikationsservers nutzen eine Multi-Protokoll Service-orientierte Kommunikation. Der Kommunikationsserver kann ausgebildet sein zur Aufschlüsselung/Umwandlung von binären Daten ("Typlos") (etwa das erste Datenformat) auf vollwertige Datenstrukturen (Typ-basierte, etwa das zweite Datenformat). Der Kommunikationsserver kann ausgebildet sein zur Überwachung der Kommunikation auf beiden Seiten. Der Kommunikationsserver kann ausgebildet sein zur Umwandlung von Zeit-gesteuerte in Ereignis-gesteuerte Kommunikation und umgekehrt. Der Kommunikationsserver kann ausgebildet sein zur Absicherung der Kommunikation nach ISO26262 (Standard der Internationalen Standardisierungs-Organisation, ISO).

Der Kommunikationsserver (ComServ, kurz für Communication Server, engl. für Kommunikationsserver) kann ausgebildet sein, um zwischen Signalkommunikation, wie sie in der Sensor-/Aktorebene eingesetzt wird, und Serviceorientierte Kommunikation, wie sie in der MEB (Modularen Elektrifizierungsbaukasten)-Rechenebene eingesetzt wird, zu vermitteln.

Der ComServ kann Services (Dienste) zur Verfügung stellen (als Server/Dienstrechner), über die Informationen aus der Signalkommunikation (etwa die Kommunikation, die auf dem zweiten Datenformat basiert) abgerufen bzw. abonniert werden können und/oder Informationen an Teilnehmer über Signalkommunikation gesendet werden können

Der ComServ kann andere Services als Client (als abrufender Rechner) nutzen um Daten abzurufen und diese als Signale zu senden und/oder um Daten aus Signalen an Services (Server) zu übertragen.

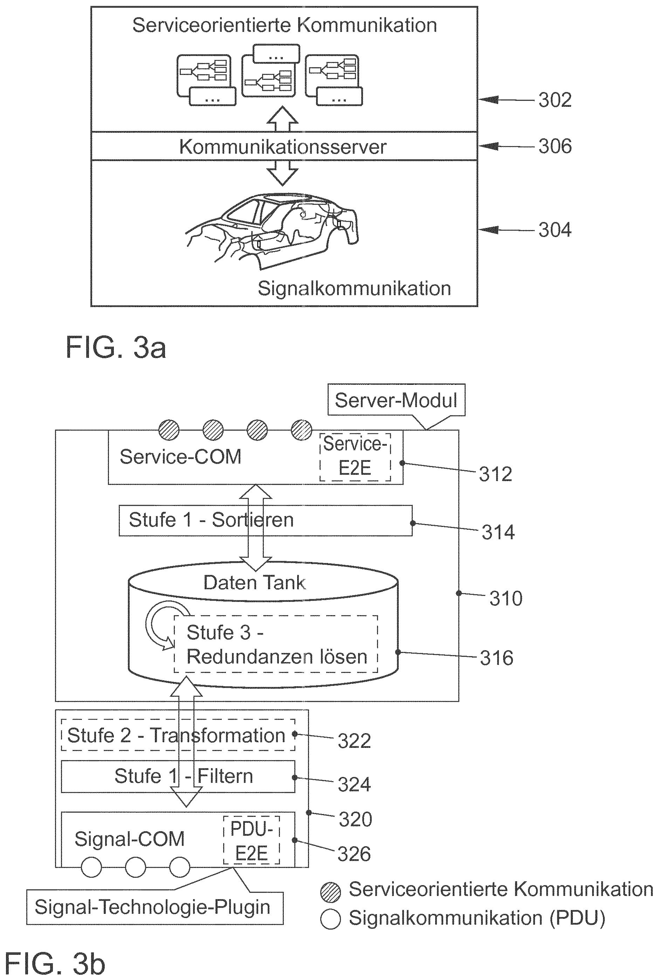

Fig. 3a zeigt ein schematisches Diagramm einer Kommunikation in einem Fahrzeug mit einer Serviceorientierten Kommunikation zwischen Fahrzeugapplikationen 302 (etwa die zweite Mehrzahl von Fahrzeugkomponenten) und einer Signalkommunikation zwischen Fahrzeugsensoren/Aktoren 304 (etwa die erste Mehrzahl von Fahrzeugkomponenten). Der Kommunikationsserver 306 stellt eine Kommunikationsschnittstelle zwischen der Signalkommunikation und der Serviceorientierten Kommunikation bereit.

Fig. 3b zeigt eine Funktionsarchitektur eines beispielhaften Kommunikationsservers. Der Kommunikationsserver kann beispielsweise ein Server-Modul 310 und ein Signal-Technologie-Plugin (Zusatzbauteil) 320 umfassen. Das Server-Modul kann beispielsweise für verschiedene Signal-Technologien genutzt werden. Das Server-Modul stellt ein protokollabhängiges Service-Verhalten bereit (etwa über die SomelP oder ViWi Protokolle). Das Server-Modul stellt ferner optional eine Transformation von redundanten Daten (als generisches Artefakt) und/oder einen E2E-Transformer (Ende-zu-Ende-Transformierer, zur Bereitstellung der Ende-zu-Ende-Abgesicherte Kommunikation) bereit.

Das Server-Modul umfasst dazu eine Service-Kommunikationsschnittstelle 312, die über Service-orientierte Kommunikation (etwa das zweite Datenformat) kommuniziert, und die optional eine Service-Schnittstelle für die Ende-zu-Ende-Abgesicherte Kommunikation umfassen kann. In einer ersten Stufe 314 können die Daten zwischen einem Datentank 316 und der Kommunikationsschnittstelle 312 sortiert werden. In Stufe 3 im Datentank 316 können ferner optional Redundanzen gelöst werden.

Das Signal-Technologie-Plugin 320 umfasst eine Signal-Kommunikationsschnittstelle 324, die über Signal-Kommunikation (PDU, Payload Data Unit, Nutzdateneinheit) kommuniziert, und die optional eine PDU-Schnittstelle für die Ende-zu-Ende-Abgesicherte Kommunikation umfassen kann. Das Signal-Technologie-Plugin 320 umfasst ferner die Stufen 1 - Filtern 324 zum Filtern der Signal-Kommunikation und optional die Stufe 2 - Transformation 322 zum Konvertieren der Signal-Kommunikation in ein Datenformat der Service-Kommunikation. Das Signal-Technologie-Plugin kann etwa eine Kommunikationsüberwachung, ein Mapping (Zuweisung) von Signalen auf Service-Elemente (generisches Artefakt, analog "Routingmatrix"), und/oder einen E2E-Transformer (Ende-zu-Ende-Transformierer, zur Bereitstellung der Ende-zu-Ende-Abgesicherte Kommunikation) bereitstellen.

Zumindest manche Ausführungsbeispiele des Kommunikationsservers unterstützen die Protokolle SOME/IP und ViWi. Der Kommunikationsserver kann die Anforderung einhalten, als maximales Datenalter von Signaländerung zum Service (und umgekehrt) 2 ms und als maximale Aufstartzeit ein Bereitstellen der Services nach max. 200 ms zu unterstützen. Bis zu 1 MB an Daten können durch den Kommunikationsserver vorgehalten werden. Zumindest manche Ausführungsbeispielen unterstützen die Sicherheitsvorgaben der Systeme OBD (On-Board-Diagnose, Diagnose im Fahrzeug) und ASIL D (Automotive Safety Integrity Level D, Fahrzeugsicherheitsintegritätsstufe D). Zumindest manche Ausführungsbeispiele des Kommunikationsservers unterstützen ferner eine Updatebarkeit. Ein Update kann beispielsweise keinen Einfluss auf andere Anwendungen auf ICAS1 haben.

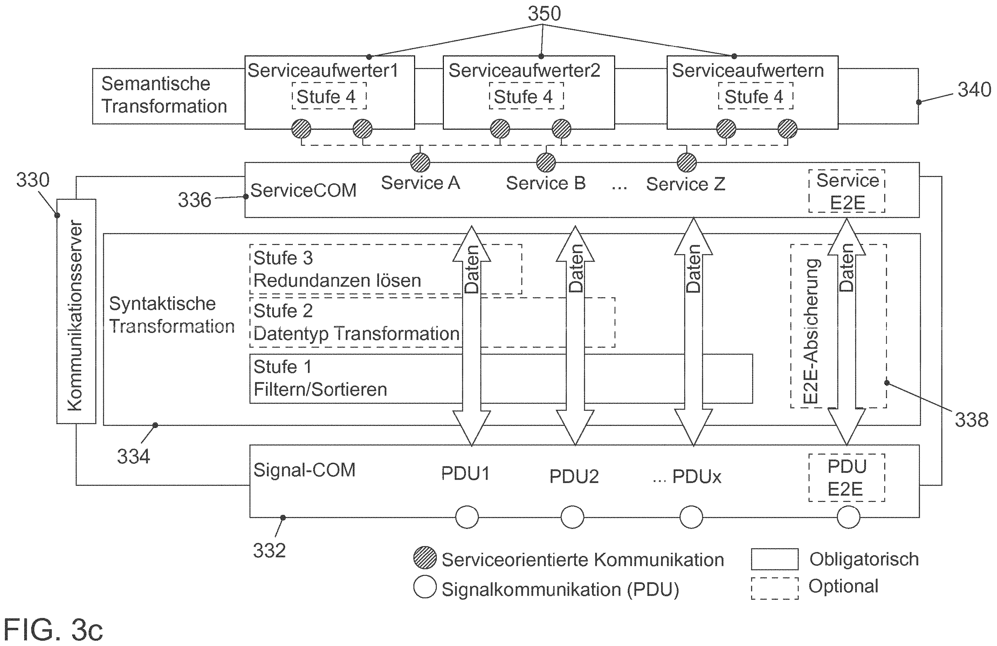

Der Kommunikationsserver stellt eine Transformation der Daten zwischen Sensor/Aktor- und Rechenebene bereit. Fig. 3c illustriert eine solche Transformation. Signalkommunikation erreicht einen Kommunikationsserver 330 über eine Signalkommunikationsschnittstelle 332. Der Kommunikationsserver ist ausgebildet um eine syntaktische Transformation 334 zwischen der Signalkommunikation und Serviceorientierter Kommunikation bereitzustellen. Diese umfasst die Stufe 1 (Filtern/Sortieren) sowie die optionalen Stufen 2 (Datentyp-Transformation) und 3 (Redundanzen Lösen). Die Serviceorientierte Kommunikation wird daraufhin im Rahmen von mehreren Services einer Mehrzahl von Serviceaufwertern (etwa der zweiten Mehrzahl von Fahrzeugkomponenten) 350 über eine Servicekommunikationsschnittstelle 336 bereitgestellt, die optional eine semantische Transformation 340 vornehmen, die Stufe 4 darstellt. Ferner stellt der Kommunikationsserver optional eine Ende-zu-Ende-Absicherung 338 zwischen Signalkommunikationsschnittstelle 332 und Servicekommunikationsschnittstelle 336 bereit. Die zumindest eine Schnittstelle 12, die in Zusammenhang mit Fig. 1a eingeführt wird, kann beispielsweise die Signalkommunikationsschnittstelle 332 und die Servicekommunikationsschnittstelle 336 umfassen.

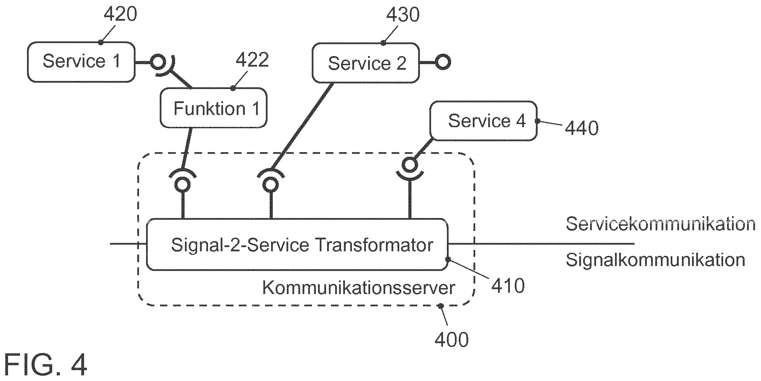

Fig. 4 zeigt eine Systemübersicht eines beispielhaften Kommunikationsservers 400. Der Kommunikationsserver umfasst einen Signal-zu-Service-Transformator 410, der eine Zuweisung und optional eine Konvertierung zwischen der Signalkommunikation und der Servicekommunikation bereitstellt. Services 1 420, 2 430 und 4 440 greifen mittels Servicekommunikation auf den Kommunikationsserver zu, etwa basierend auf einem Pull-Paradigma durch Abruf von Daten (Service 2, Service 1 über Funktion 1 422) oder basierend auf einem Push-Paradigma durch Empfangen von durch den Kommunikationsserver 400 bereitgestellten Daten (Service 4).

Der Kommunikationsserver bildet beispielsweise eine Sender-/Receiver (Sender/Empfänger) Schnittstelle aus der Signalwelt auf Service-Interfaces ab, bietet beispielsweise Services-Interfaces (Server) zum Empfangen von Informationen aus der Signalwelt und/oder fungiert beispielsweise als Server/Client zum Senden von Informationen in die Signalwelt.

Der Kommunikationsserver umfasst einen Signal-2-Service Transformator (etwa die Datenvermittlungsvorrichtung 10).

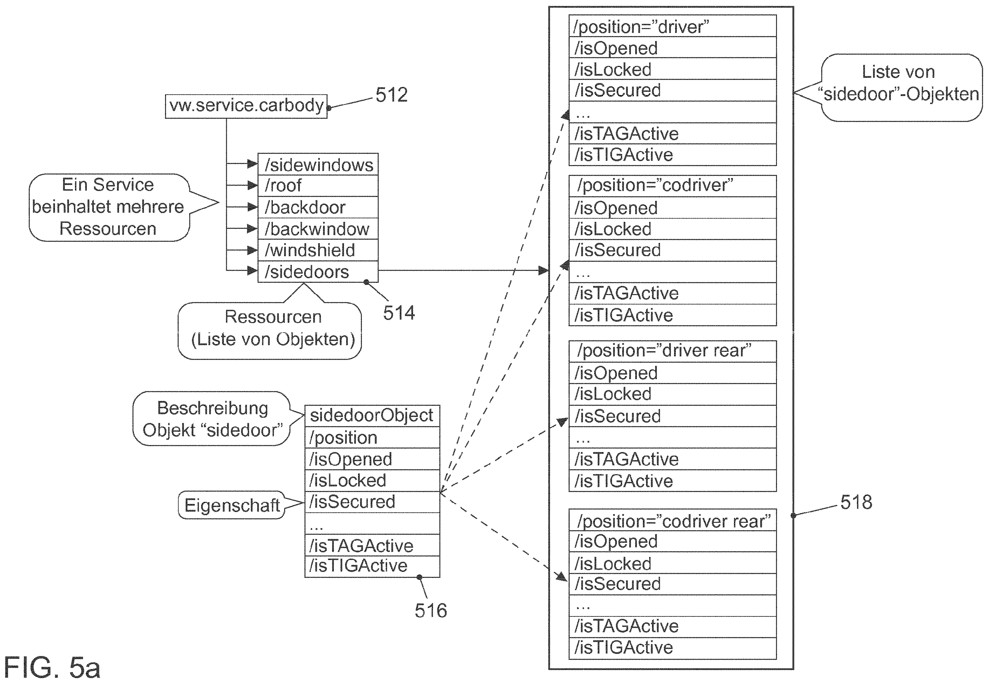

Fig. 5a zeigt ein Beispiel für ein Service-Datenmodell (das etwa auf dem zweiten Datenformat basiert). Ein Service 512 umfasst mehrere Ressourcen 514, die als Objekte repräsentiert sein können. Im vorliegenden Fall hat der Service "vw.service.carbody" ("vw" und "service" dienen als Hersteller- und Protokollspezifische Präfixe, "carbody" (Karosserie) ist der Service-Bezeichner), die Ressourcen 514 "sidewindows" (Seitenfenster), "roof" (Dach), "backdoor" (Kofferraumtür), "backwindow" (Kofferraumfenster), "windshield" (Windschutzscheibe) und "sidedoors" (Seitentüren) sind die Ressourcen des Services. Die Ressource "sidedoors" wird durch das Objekt "sidedoor" 516 definiert, das die Eigenschaften "position", "isOpened" (istOffen), "isLocked" (istVerschlossen), isSecured (istGesichert), ..., "isTAGActive" (istTAGBetaetigt) und "isTIGActive" (istTIGBetaetigt) beschrieben wird. Dieses "sidedoor"-Objekt wird von der Ressource "sidedoors" in vier Instanzen 518 für die "sidedoor"-Objekte mit den Positionen "driver" (Fahrer), "codriver" (Beifahrer), "driver rear" (hinter dem Fahrer) und "codriver read" (hinter dem Beifahrer) verwendet, um einen Zugriff auf die "sidedoor"-Ressource bereitzustellen.

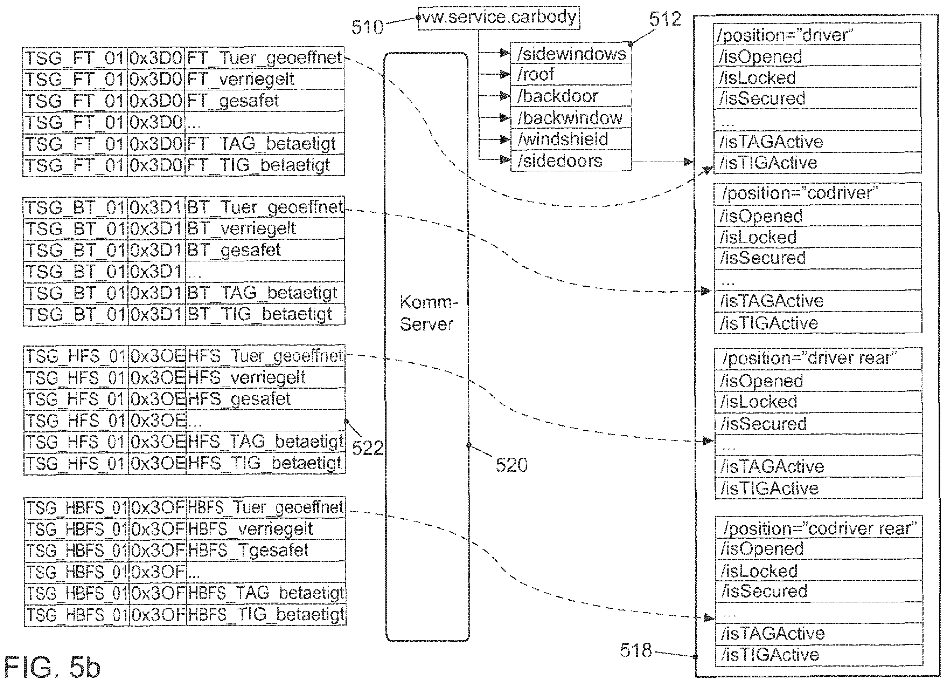

In Fig. 5b wird eine Zuordnung zwischen dem Service-Datenmodell 518 von Fig. 5a zu einem Signaldatenmodell 522 durch einen Kommunikationsserver 520 gezeigt. Dabei ist der Kommunikationsserver ausgebildet, die Signaldaten für die Signalquellen TSG_FT_01 (Fahrertür), TSG_BT_01 (Beifahrertür), TSG_HFS_01 (Tür hinter dem Fahrer) und TSG_HBFS_01 (Tür hinter Beifahrer) mit den jeweiligen Informationen mit den Suffixen _Tuer_geoeffnet, _verriegelt, _gesafet, _TAG_betaetigt, _TIG_betaetigt den entsprechenden Service-Daten des Service-Datenmodells zuzuordnen.

In folgenden werden verschiedene Signaltypen vorgestellt. Es werden folgende Signaltypen unterschieden:
- Typ0 ("1-Bit"): Signal hat eine Länge von 1 Bit- Initiatlisierungs-Wert ("init-Wert") ist einer der beiden möglichen Werte (üblicherweise 0)
- Typ1 ("rein Logisch"): Signal hat nur logische Werte + init Wert
- Typ2 ("logisch mit Fehler"): Signal hat nur logische Werte + Init-Wert + Fehler-Wert
- Typ3 ("rein physikalisch"): Signal hat nur physikalische Werte + Init-Wert
- Typ4 ("physikalisch mit Fehler") Signal hat nur physikalische Werte + Init-Wert + Fehler-Wert
- Typ5 ("logisch und physikalisch") Signal hat physikalische und logische Werte + Init-Wert + Fehler Wert
- Typ6 ("Konstantes Signal"): Signal hat logische Werte. Signal hat in einem Fahrzeug einen der logischen Wert konstant □Untermenge von Typ1

Diese Signaltypen werden in zumindest manchen Ausführungsbeispielen (einer Konvertierung zwischen dem zumindest einen ersten Datenformat und dem zumindest einen zweiten Datenformat) folgendermaßen in das Service-Datenmodell übersetzt. Im Folgenden bezeichnen die Bezugszeichen:
- 530 einen Bezeichner eines Services (Dienstes)
- 532 eine Versionsnummer des Services
- 534 einen Identifikator des Services
- 536 einen Bezeichner einer Ressource des Services
- 538 einen Identifikator der Ressource
- 540 eine Eigenschaft (Property) der Ressource
- 542 einen Datentyp der Eigenschaft
- 544 den Wert der Eigenschaft (Property Value)

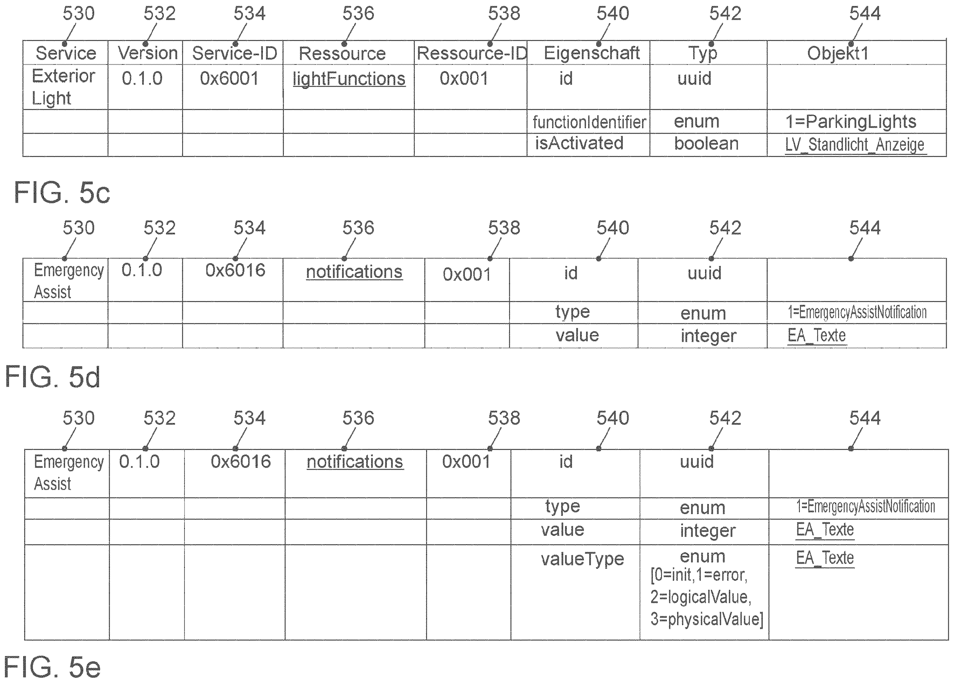

Bei Typ0 ("1-Bit") wird eine Abbildung des Signals auf eine Property (Eigenschaft) vom Typ "boolean" vorgenommen. Fig. 5c zeigt ein Beispiel, in dem der Service ExteriorLight (Außenlicht) die Ressource "lightFunctions" (Lichtfunktionalität") mit den Eigenschaften "id" (Identifikator) vom Datentyp "uuid" (Universally Unique Identifier, Universeller Einzigartiger Identifikator), "functionldentifier" vom Datentyp "enum" und dem Wert "1 - ParkingLights" (Parklicht) und "isActivated" (ist aktiviert) vom Datentyp "Boolean" und mit dem Wert (Objekt) "LV_Standlicht_Anzeige".

Bei Typ1a ("rein Logisch") hat das Signal nur logische Werte und einen (impliziten) init-Wert. Dies stellt eine Abbildung des Signals auf eine Eigenschaft vom Typ "integer" dar, wie in Fig. 5d gezeigt wird. Dort hat der Service "EmergencyAssist" (Notfallassistenz) die Ressource "notifications" (Benachrichtigungen) mit den Eigenschaften "id" (Identifikator) vom Datentyp "uuid", "type" (Typ) vom Datentyp "enum" und dem Wert "1 - EmergencyAssistNotification" (Notfallassistenzbenachrichtigung) sowie "value" vom Datentyp "integer" mit dem Wert "EA_Texte" (Notfallassistenz-Texte). Der empfangene Signalwert wird in "property value" bereitgestellt. Konstante Signale (ohne Init-Wert) können auch bei Ausfall der Quelle weiterhin mit dem letzten Wert bedient werden.

Bei Typ1b ("rein Logisch") hat das Signal nur logische Werte und einen (impliziten) init-Wert. Dies stellt eine Abbildung des Signals auf eine Property vom Typ "integer" dar. Die Eigenscaft "valueType" (Werttyp) vom Typ "enum" zeigt an, ob ein Initialisierungswert vorliegt. Fig. 5e zeigt ein Beispiel für den Service "EmergencyAssist" mit der Ressource "notifications" mit den Eigenschaften "id" (Identifikator) vom Datentyp "uuid", "type" vom Datentyp "enum" und dem Wert "1 - EmergencyAssistNotification", "value" vom Datentyp "integer" mit dem Wert "EA_Texte" sowie dem "valueType" vom Datentyp "enum [0=init, 1=error, 2=logicalValue, 3=physicalValue]" (0=Initialisierung, 1=Fehler, 2=logischer Fehler, 3=physikalischer Wert) mit dem Wert "EA_Texte". Der empfangene Signalwert wird in property value bereitgestellt. Bei Empfang des "Init"-Wertes wird dieser in "value" (Wert) zur Verfügung gestellt und "valueType" auf "0" gesetzt.

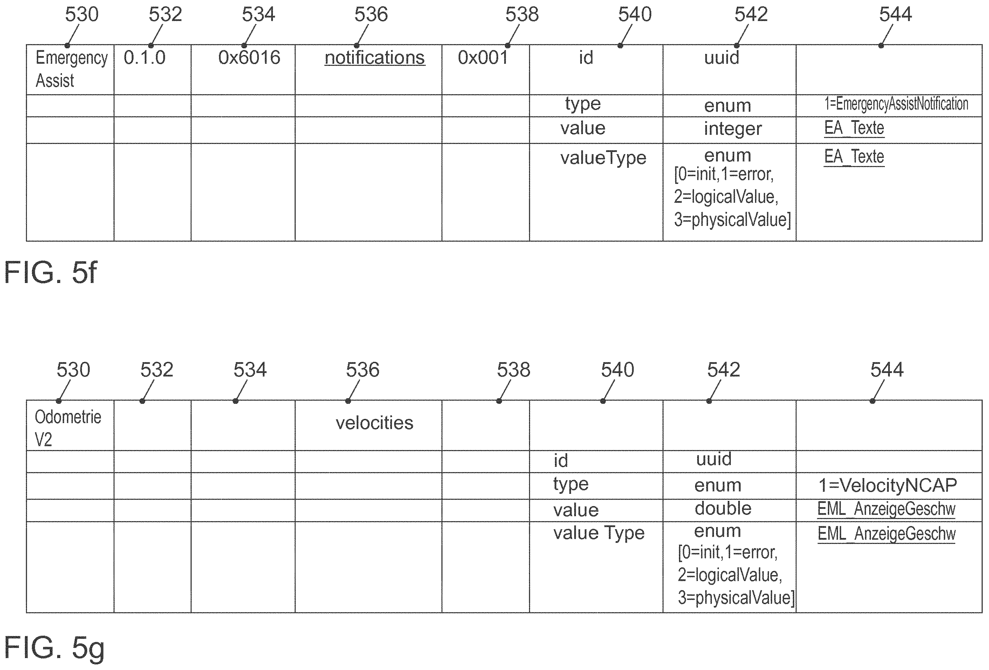

Bei Typ2 ("logisch mit Fehler") hat das Signal nur logische Werte, einen init-Wert und einen Fehler-Wert. Dabei wird das Signal auf eine Property vom Typ "integer" abgebildet. Die Eigenschaft "valueType" vom Typ "enum" zeigt an, ob init-,Fehler-oder gültiger Wert vorliegt. Fig. 5f zeigt ein Beispiel für den Service "EmergencyAssist" mit der Ressource "notifications" mit den Eigenschaften "id" (Identifikator) vom Datentyp "uuid", "type" vom Datentyp "enum" und dem Wert "1 - EmergencyAssistNotification", "value" vom Datentyp "integer" mit dem Wert "EA_Texte" sowie dem "valueType" vom Datentyp "enum [0=init, 1=error, 2=logicalValue, 3=physicalValue]" (0=Initialisierung, 1=Fehler, 2=logischer Fehler, 3=physikalischer Wert) mit dem Wert "EA_Texte". Der Empfangene Signalwert wird als Eigenschaft "value" bereitgestellt. Bei Empfang des Init-oder Fehler-Wertes wird dieser in "value" zur Verfügung gestellt und "valueType" auf "0" bzw. "1" gesetzt. Bei Empfang eines gültigen Wertes wird "valueType" auf "2=logicalValue" gesetzt.

Bei Typ3 ("rein physikalisch") hat das Signal nur physikalische Werte und einen Init-Wert, bei Typ4 zusätzlich einen Fehler-Wert. Dies stellt eine Abbildung des Signals auf eine Property vom Typ "integer" oder "double" dar. Die Eigenschaft "valueType" vom Typ "enum" zeigt an, ob init-oder gültiger Wert vorliegt. Fig. 5g zeigt ein Beispiel für den Service "Odometrie V2" mit der Ressource "velocities" (Geschwindigkeiten) mit den Eigenschaften "id" (Identifikator) vom Datentyp "uuid", "type" vom Datentyp "enum" und dem Wert "1 - VelocityNCAP" (Velocity New Car Assessment Programme, Geschwindigkeit Neuwagen-Bewertungs-Programm), "value" vom Datentyp "double" mit dem Wert "EML_AnzeigeGeschw" sowie dem "valueType" vom Datentyp "enum [0=init, 1=error, 2=logicalValue, 3=physicalValue]" mit dem Wert "EML_AnzeigeGeschw". Der empfangene Signalwert wird in Eigenschaft "value" bereitgestellt. Bei Empfang des Init-oder Fehler-Wertes wird dieser in "value" zur Verfügung gestellt und "valueType" auf "0" bzw. "1" gesetzt. Bei Empfang eines gültigen Wertes wird "valueType" auf "3=physicalValue" gesetzt.

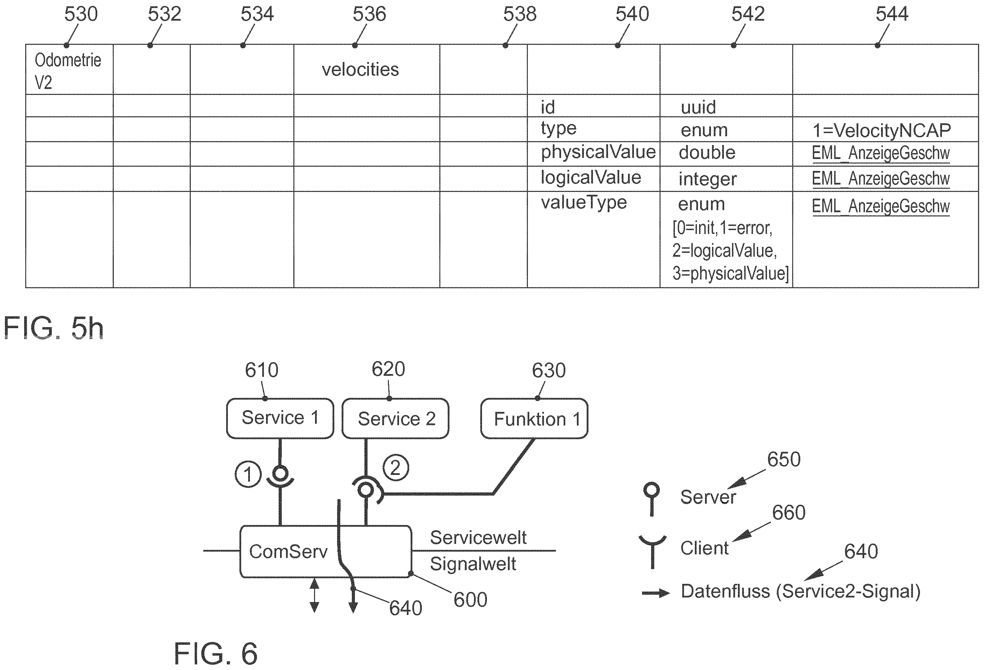

Bei Typ5 ("logisch und physikalisch") hat das Signal physikalische und logische Werte, einen Init-Wert und einen Fehler Wert. Dabei wird eine Abbildung des Signals auf eine Property vom Typ "integer" oder "double" für physikalische Werte und eine Abbildung auf Property vom Typ "integer" für logische Werte vorgenommen. Die Property "valueType" vom Typ "enum" zeigt an, ob init-, Fehler, physikalischer oder logischer Wert vorliegt. Fig. 5h zeigt ein Beispiel für den Service "Odometrie V2" mit der Ressource "velocities" mit den Eigenschaften "id" vom Datentyp "uuid", "type" vom Datentyp "enum" und dem Wert "1 - VelocityNCAP", "physicalValue" vom Datentyp "double" mit dem Wert "EML_AnzeigeGeschw", "logicalValue" vom Datentyp "integer" und dem Wert "EML_AnzeigeGeschw" sowie dem "valueType" vom Datentyp "enum [0=init, 1=error, 2=logicalValue, 3=physicalValue]" mit dem Wert "EML_AnzeigeGeschw". Der empfangene Signalwert wird in Property "physicalValue" (transformierter Rohwert) und in der Property "logicalValue" (Rohwert) bereitgestellt. "valueType" wird entsprechend des empfangenen Wertes gesetzt.

In zumindest manchen Ausführungsbeispielen ist der Kommunikationsserver (etwa die Datenvermittlungsvorrichtung) ein Service-zu-Signal Transformator. Damit können etwa Informationen von einem Teilnehmer aus der Servicewelt (etwa von der zweiten Mehrzahl von Fahrzeugkomponenten) in die Signalwelt gesendet werden.

Fig. 6 zeigt ein schematisches Diagramm einer solchen Kommunikation. Ein Kommunikationsserver 600 stellt einen Service-zu-Signal-Transformator bereit (etwa die Kommunikationsschnittstelle) Damit wird eine Transformation eines Datenflusses 640 aus der Servicewelt in die Signalwelt ermöglicht. Dabei kann der Kommunikationsserver 600 sowohl als Server 650 als auch als Client 660 in der Kommunikation mit Diensten 610; 620 oder Funktionen 630 dienen. So ist der Kommunikationsserver etwa Client von Service 1 610 und Server für Service 2 620 und Funktion 1 630.

Folgende zwei Umsetzungsvarianten können von dem Kommunikationsserver (etwa über die Kommunikationsschnittstelle) bereitgestellt werden:
- Variante 1 ("Kommunikationsserver holt ab"): der Kommunikationsserver ist Client und der Service ist Server
- Variante 2 ("Zyklisches Set"): der Kommunikationsserver ist Server und der Service ist Client

In Variante 1 ist, wie in Fig. 6 gezeigt, Service1 610 der Server, der Kommunikationsserver 600 ist der Client. Der Kommunikationsserver "subscribed" (abonniert) sich bei Service1 auf Änderungen der entsprechenden Services/Ressourcen/Properties (die den zu schreibenden Signalwert enthalten). So lange Service1 verfügbar ist, schreibt der Kommunikationsserver den aktuell vorliegenden Wert in die Signalwelt.

In Variante 2 ist, wie ebenfalls in Fig. 6 gezeigt, Service 2 620 der Client und der Kommunikationsserver 600 ist Server. Service2 ruft "Set" Methode von dem Kommunikationsserver auf, um einen Signalwert in die Signal-Welt zu schreiben. So lange wie in dem Zeitraum Ttimeout ein erneuter Aufruf der "Set" Funktion erfolgt, schreibt ComServ den aktuell vorliegenden Wert in die Signalwelt.

Mehr Details und Aspekte des Kommunikationsservers werden in Verbindung mit dem Konzept oder Beispielen genannt, die vorher (z.B. Fig. 1a bis 2b) beschrieben wurden. Der Kommunikationsserver kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Datenvermittlungsvorrichtung
- 12: Schnittstelle
- 14: Kontrollmodul
- 20: Vorrichtung
- 22: Schnittstelle
- 24: Kontrollmodul
- 30: Erste Mehrzahl von Fahrzeugkomponenten
- 40: Zweite Mehrzahl von Fahrzeugkomponenten
- 100: Fahrzeug
- 110: Kommunizieren mit einer ersten Mehrzahl von Fahrzeugkomponenten
- 120: Kommunizieren mit einer zweiten Mehrzahl von Fahrzeugkomponenten
- 130: Bereitstellen einer Kommunikationsschnittstelle
- 210: Kommunizieren mit einer Datenvermittlungsvorrichtung
- 220: Nutzen der Datenvermittlungsvorrichtung
- 302: Fahrzeugapplikationen
- 304: Fahrzeugsensoren/Aktoren
- 306: Kommunikationsserver
- 310: Server-Modul
- 312: Service-Kommunikationsschnittstelle
- 314: Erste Stufe: Sortieren
- 316: Datentank
- 320: Signal-Technologie-Plugin
- 322: Stufe 2: Transformation
- 324: Stufe 1: Filtern
- 326: Signal-Kommunikationsschnittstelle
- 330: Kommunikationsserver
- 332: Signal-Kommunikationsschnittstelle
- 334: Syntaktische Transformation
- 336: Service-Kommunikationsschnittstelle
- 338: Ende-zu-Ende-Absicherung
- 340: Semantische Transformation
- 350: Serviceaufwerter
- 400: Kommunikationsserver
- 410: Signal-zu-Service-Transformator
- 420: Service 1
- 422: Funktion 1
- 430: Service 2
- 440: Service 4
- 512: Service
- 514: Ressourcen
- 516: Objektbeschreibung
- 518: Instanzen des Objekts
- 520: Kommunikationsserver
- 522: Signaldatenmodell
- 530: Bezeichner eines Services (Dienstes)
- 532: Versionsnummer des Services
- 534: Identifikator des Services
- 536: Bezeichner einer Ressource des Services
- 538: Identifikator der Ressource
- 540: Eigenschaft der Ressource
- 542: Datentyp der Eigenschaft
- 544: Wert der Eigenschaft
- 600: Kommunikationsserver
- 610: Service 1
- 620: Service 2
- 630: Funktion 1
- 640: Datenfluss
- 650: Server
- 660: Client

## Patentansprüche

1. Datenvermittlungsvorrichtung (10) für ein Fahrzeug (100), die Datenvermittlungsvorrichtung (10) umfassend:
zumindest eine Schnittstelle (12), ausgebildet zur Kommunikation mit einer ersten Mehrzahl (30) von Fahrzeugkomponenten des Fahrzeugs (100) und zur Kommunikation mit einer zweiten Mehrzahl (40) von Fahrzeugkomponenten des Fahrzeugs (100); und
ein Kontrollmodul (14), ausgebildet zum Kommunizieren mit der ersten Mehrzahl (30) von Fahrzeugkomponenten des Fahrzeugs basierend auf zumindest einem ersten Datenformat und mit der zweiten Mehrzahl von Fahrzeugkomponenten (40) des Fahrzeugs basierend auf zumindest einem zweiten Datenformat,
wobei das Kontrollmodul (14) ausgebildet ist, um eine Kommunikationsschnittstelle für die Kommunikation zwischen der ersten Mehrzahl (30) von Fahrzeugkomponenten und der zweiten Mehrzahl (40) von Fahrzeugkomponenten bereitzustellen, wobei eine Kommunikation zwischen der ersten Mehrzahl von Fahrzeugkomponenten und der Kommunikationsschnittstelle und eine Kommunikation zwischen der zweiten Mehrzahl von Fahrzeugkomponenten und der Kommunikationsschnittstelle jeweils über die zumindest eine Schnittstelle durchgeführt wird,
wobei das Kontrollmodul (14) ausgebildet ist, um einen Zugriff auf erste Informationen der ersten Mehrzahl (30) von Fahrzeugkomponenten durch Bereitstellen von zweiten Informationen für die zweite Mehrzahl (40) von Fahrzeugkomponenten bereitzustellen, wobei die ersten Informationen auf dem zumindest einen ersten Datenformat basieren, und wobei die zweiten Informationen auf dem zumindest einen zweiten Datenformat basieren,
wobei das Kontrollmodul (14) ausgebildet ist, um zumindest eine redundante Information in den ersten Informationen der ersten Mehrzahl (30) von Fahrzeugkomponenten aufzulösen und damit dritte Informationen zu bilden,
wobei die Datenvermittlungsvorrichtung (10) ausgebildet ist, um, durch Zuordnung der Inhalte der dritten Informationen im ersten Datenformat in das zweite Datenformat und/oder durch Konversion der Inhalte der dritten Informationen im ersten Datenformat in das zweite Datenformat, eine Umsetzung von den dritten Informationen, die im ersten Datenformat vorliegen, in das zweite Datenformat bereitzustellen,
sodass durch das Auflösen der redundanten Information ein einheitlicher Zugriff auf die Daten der ersten Mehrzahl (30) von Fahrzeugkomponenten ermöglicht wird, indem bei Zugriffen durch mehrere Fahrzeugkomponenten der zweiten Mehrzahl (40) von Fahrzeugkomponenten stets die Information der gleichen Quelle oder Quellen der ersten Mehrzahl (30) von Fahrzeugkomponenten bereitgestellt wird.

2. Die Datenvermittlungsvorrichtung (10) gemäß Anspruch 1, wobei das Kontrollmodul (14) ausgebildet ist, eine Konvertierung zwischen dem zumindest einen ersten Datenformat und dem zumindest einen zweiten Datenformat für die Kommunikation zwischen der ersten Mehrzahl (30) von Fahrzeugkomponenten und der zweiten Mehrzahl (40) von Fahrzeugkomponenten bereitzustellen.

3. Die Datenvermittlungsvorrichtung (10) gemäß einem der vorhergehenden Ansprüche, wobei das Kontrollmodul (14) ausgebildet ist, um eine Ende-zu-Ende-Abgesicherte Kommunikation zwischen einer ersten Fahrzeugkomponente der ersten Mehrzahl (30) von Fahrzeugkomponenten und einer zweiten Fahrzeugkomponente der zweiten Mehrzahl (40) von Fahrzeugkomponenten bereitzustellen.

4. Die Datenvermittlungsvorrichtung (10) gemäß Anspruch 3, wobei das Kontrollmodul (14) ausgebildet ist, um die Ende-zu-Ende-Abgesicherte Kommunikation durch eine Bestimmung von zumindest einem Übertragungsfehler und/oder Weitergabe von Information über den zumindest einen Übertragungsfehler abzusichern.

5. Die Datenvermittlungsvorrichtung (10) gemäß einem der vorherigen Ansprüche, wobei das Kontrollmodul (14) ausgebildet ist, um Fehleranzeichen der auf dem ersten Datenformat basierenden Kommunikation der ersten Mehrzahl (30) von Fahrzeugkomponenten in das zweite Datenformat zu konvertieren und der zweiten Mehrzahl (40) von Fahrzeugkomponenten bereitzustellen,
und/oder wobei das Kontrollmodul (14) ausgebildet ist, um Fehleranzeichen der auf dem zweiten Datenformat basierenden Kommunikation der zweiten Mehrzahl (40) von Fahrzeugkomponenten in das erste Datenformat zu konvertieren und der ersten Mehrzahl (30) von Fahrzeugkomponenten bereitzustellen.

6. Die Datenvermittlungsvorrichtung (10) gemäß einem der vorhergehenden Ansprüche, wobei zumindest eine Fahrzeugkomponente in der ersten Mehrzahl (30) von Fahrzeugkomponenten und in der zweiten Mehrzahl (40) von Fahrzeugkomponenten umfasst ist.

7. Die Datenvermittlungsvorrichtung (10) gemäß einem der vorhergehenden Ansprüche, wobei die erste Mehrzahl (30) von Fahrzeugkomponenten einer Mehrzahl von Steuergeräten zur Ansteuerung von Fahrzeugsensoren und/oder zur Ansteuerung von Fahrzeugaktoren entspricht,
und/oder wobei die zweite Mehrzahl (40) von Fahrzeugkomponenten eine Mehrzahl von Recheneinheiten des Fahrzeugs (100) umfasst.

8. Die Datenvermittlungsvorrichtung (10) gemäß einem der vorhergehenden Ansprüche, wobei das Kontrollmodul (14) ausgebildet ist, um die Kommunikationsschnittstelle basierend auf einer Konfigurationsinformation bereitzustellen, wobei das Kontrollmodul (14) ferner ausgebildet ist, um eine aktualisierte Konfigurationsinformation zur Erneuerung der Konfigurationsinformation zu erhalten.

9. Die Datenvermittlungsvorrichtung (10) gemäß einem der vorhergehenden Ansprüche, wobei das Kontrollmodul (14) ausgebildet ist, um die ersten Informationen der ersten Mehrzahl (30) von Fahrzeugkomponenten fortlaufend von der ersten Mehrzahl (30) von Fahrzeugkomponenten zu erhalten, um die zweiten Informationen basierend auf den ersten Informationen zu bestimmen und der zweiten Mehrzahl (40) von Fahrzeugkomponenten bereitzustellen,
und/oder wobei das Kontrollmodul (14) ausgebildet ist, um die ersten Informationen der ersten Mehrzahl (30) von Fahrzeugkomponenten fortlaufend von der ersten Mehrzahl (30) von Fahrzeugkomponenten zu erhalten, wobei das Kontrollmodul (14) ausgebildet ist, um einen Zeitablauf für das Erhalten der ersten Informationen der ersten Mehrzahl (30) von Fahrzeugkomponenten zu bestimmen.

10. Die Datenvermittlungsvorrichtung (10) gemäß einem der vorhergehenden Ansprüche, wobei das Kontrollmodul (14) ausgebildet ist, um die zweiten Informationen über eine objektorientierte Programmierschnittstelle für die zweite Mehrzahl (40) von Fahrzeugkomponenten bereitzustellen,
und/oder wobei das zweite Datenformat ein objektorientiertes Datenformat ist.

11. Ein System, umfassend die Datenvermittlungsvorrichtung gemäß einem der Ansprüche 1 bis 10 sowie eine Vorrichtung (20) für eine Fahrzeugkomponente eines Fahrzeugs, die Vorrichtung für die Fahrzeugkomponente umfassend:
eine Schnittstelle (22), ausgebildet zur Kommunikation mit einer Datenvermittlungsvorrichtung (10) des Fahrzeugs (100); und
ein Kontrollmodul (24), das ausgebildet ist, um die Datenvermittlungsvorrichtung (10) zu nutzen, um auf erste Informationen einer ersten Mehrzahl (30) von Fahrzeugkomponenten in Form von zweiten Informationen, die auf einem zweiten Datenformat basieren, zuzugreifen, wobei der Zugriff über die Datenvermittlungsvorrichtung geschieht, wobei die ersten Informationen auf einem ersten Datenformat basieren, wobei durch die Datenvermittlungsvorrichtung zumindest eine redundante Information in den ersten Informationen der ersten Mehrzahl (30) von Fahrzeugkomponenten aufgelöst wurde und damit dritte Informationen gebildet wurden, wobei durch die Datenvermittlungsvorrichtung (10) eine Umsetzung von den dritten Informationen, die im ersten Datenformat vorliegen, in das zweite Datenformat durchgeführt wurde.

12. Datenvermittlungsverfahren für ein Fahrzeug (100), das Datenvermittlungsverfahren umfassend:
Kommunizieren (110) mit einer ersten Mehrzahl von Fahrzeugkomponenten des Fahrzeugs basierend auf zumindest einem ersten Datenformat;
Kommunizieren (120) mit einer zweiten Mehrzahl von Fahrzeugkomponenten des Fahrzeugs basierend auf zumindest einem zweiten Datenformat;
Bereitstellen (130) einer Kommunikationsschnittstelle für die Kommunikation zwischen der ersten Mehrzahl von Fahrzeugkomponenten und der zweiten Mehrzahl von Fahrzeugkomponenten,
wobei das Bereitstellen (130) der Kommunikationsschnittstelle umfasst, einen Zugriff auf erste Informationen der ersten Mehrzahl von Fahrzeugkomponenten durch Bereitstellen von zweiten Informationen für die zweite Mehrzahl von Fahrzeugkomponenten bereitzustellen, wobei die ersten Informationen auf dem zumindest einen ersten Datenformat basieren, und wobei die zweiten Informationen auf dem zumindest einen zweiten Datenformat basieren,
wobei zumindest eine redundante Information in den ersten Informationen der ersten Mehrzahl von Fahrzeugkomponenten aufgelöst wird und damit dritte Informationen gebildet werden,
wobei das Datenvermittlungsverfahren dazu vorgesehen ist, um, durch Zuordnung der Inhalte der dritten Informationen im ersten Datenformat in das zweite Datenformat und/oder durch Konversion der Inhalte der dritten Informationen im ersten Datenformat in das zweite Datenformat, eine Umsetzung von den dritten Informationen, die im ersten Datenformat vorliegen, in das zweite Datenformat bereitzustellen,
sodass durch das Auflösen der redundanten Information ein einheitlicher Zugriff auf die Daten der ersten Mehrzahl von Fahrzeugkomponenten ermöglicht wird, indem bei Zugriffen durch mehrere Fahrzeugkomponenten der zweiten Mehrzahl von Fahrzeugkomponenten stets die Information der gleichen Quelle oder Quellen der ersten Mehrzahl von Fahrzeugkomponenten bereitgestellt wird.

13. Das Verfahren gemäß Anspruch 12, wobei die in Anspruch 12 genannten Verfahrensschritte durch eine Datenvermittlungsvorrichtung durchgeführt werden, wobei das Verfahren ferner folgende Schritte umfasst, wobei die folgenden Schritte durch eine Fahrzeugkomponente eines Fahrzeugs ausgeführt werden:
Kommunizieren (210) mit der Datenvermittlungsvorrichtung (10) des Fahrzeugs (100); und
Nutzen (220) der Datenvermittlungsvorrichtung (10), um auf erste Informationen einer ersten Mehrzahl von Fahrzeugkomponenten in Form von zweiten Informationen, die auf einem zweiten Datenformat basieren, zuzugreifen, wobei der Zugriff über die Datenvermittlungsvorrichtung geschieht, wobei die ersten Informationen auf einem ersten Datenformat basieren, wobei zumindest eine redundante Information in den ersten Informationen der ersten Mehrzahl von Fahrzeugkomponenten durch die Datenvermittlungsvorrichtung aufgelöst wurde und damit dritte Informationen gebildet wurden, wobei durch die Datenvermittlungsvorrichtung (10) eine Umsetzung von den dritten Informationen, die im ersten Datenformat vorliegen, in das zweite Datenformat durchgeführt wurde.

14. Programm mit einem Programmcode zum Durchführen zumindest des Verfahrens gemäß Anspruch 12, wenn der Programmcode auf einem Computer, einem Prozessor, einem Controller oder einer programmierbaren Hardwarekomponente ausgeführt wird.

## Claims

1. Data switching apparatus (10) for a vehicle (100), the data switching apparatus (10) comprising:
at least one interface (12) configured to communicate with a first plurality (30) of vehicle components of the vehicle (100) and to communicate with a second plurality (40) of vehicle components of the vehicle (100); and
a control module (14) configured to communicate with the first plurality (30) of vehicle components of the vehicle on the basis of at least one first data format and with the second plurality of vehicle components (40) of the vehicle on the basis of at least one second data format,
wherein the control module (14) is configured to provide a communication interface for communication between the first plurality (30) of vehicle components and the second plurality (40) of vehicle components, wherein communication between the first plurality of vehicle components and the communication interface and communication between the second plurality of vehicle components and the communication interface is carried out via the at least one interface in each case,
wherein the control module (14) is configured to provide access to a first information set of the first plurality (30) of vehicle components by providing a second information set for the second plurality (40) of vehicle components, wherein the first information set is based on the at least one first data format, and wherein the second information set is based on the at least one second data format,
wherein the control module (14) is configured to resolve at least one redundant information item in the first information set of the first plurality (30) of vehicle components and thus form a third information set,
wherein the data switching apparatus (10) is configured to provide a transformation of the third information set, which is in the first data format, into the second data format by mapping the contents of the third information set, which is in the first data format, into the second data format and/or by converting the contents of the third information set, which is in the first data format, into the second data format,
such that, by resolving the redundant information item, uniform access to the data of the first plurality (30) of vehicle components is enabled, by way of always providing the information from the same source or sources of the first plurality (30) of vehicle components when accessed by means of multiple vehicle components of the second plurality (40) of vehicle components.

2. Data switching apparatus (10) according to claim 1, wherein the control module (14) is configured to provide a conversion between the at least one first data format and the at least one second data format for communication between the first plurality (30) of vehicle components and the second plurality (40) of vehicle components.

3. Data switching apparatus (10) according to any of the preceding claims, wherein the control module (14) is configured to provide end-to-end secure communication between a first vehicle component of the first plurality (30) of vehicle components and a second vehicle component of the second plurality (40) of vehicle components.

4. Data switching apparatus (10) according to claim 3, wherein the control module (14) is configured to secure the end-to-end secure communication by determining at least one transmission error and/or disclosing information about the at least one transmission error.

5. Data switching apparatus (10) according to any of the preceding claims, wherein the control module (14) is configured to convert error signals from the communication of the first plurality (30) of vehicle components, which is based on the first data format, into the second data format, and to provide them to the second plurality (40) of vehicle components,
and/or wherein the control module (14) is configured to convert error signals from the communication of the second plurality (40) of vehicle components, which is based on the second data format, into the first data format, and to provide them to the first plurality (30) of vehicle components.

6. Data switching apparatus (10) according to any of the preceding claims, wherein at least one vehicle component is included in the first plurality (30) of vehicle components and in the second plurality (40) of vehicle components.

7. Data switching apparatus (10) according to any of the preceding claims, wherein the first plurality (30) of vehicle components corresponds to a plurality of control devices for controlling vehicle sensors and/or for controlling vehicle actuators,
and/or wherein the second plurality (40) of vehicle components comprises a plurality of computing units of the vehicle (100).

8. Data switching apparatus (10) according to any of the preceding claims, wherein the control module (14) is configured to provide the communication interface on the basis of configuration information, wherein the control module (14) is further configured to receive updated configuration information in order to refresh the configuration information.

9. Data switching apparatus (10) according to any of the preceding claims, wherein the control module (14) is configured to continuously receive the first information set of the first plurality (30) of vehicle components from the first plurality (30) of vehicle components, in order to determine the second information set on the basis of the first information set and to provide it to the second plurality (40) of vehicle components,
and/or wherein the control module (14) is configured to continuously receive the first information set of the first plurality (30) of vehicle components from the first plurality (30) of vehicle components, wherein the control module (14) is configured to determine a timeout for receiving the first information set of the first plurality (30) of vehicle components.

10. Data switching apparatus (10) according to any of the preceding claims, wherein the control module (14) is configured to provide the second information set via an object-oriented programming interface for the second plurality (40) of vehicle components,
and/or wherein the second data format is an object-oriented data format.

11. System, comprising the data switching apparatus according to any of claims 1 to 10 and an apparatus (20) for a vehicle component of a vehicle, the apparatus for the vehicle component comprising:
an interface (22) configured to communicate with a data switching apparatus (10) of the vehicle (100); and
a control module (24) configured to use the data switching apparatus (10) in order to access a first information set of a first plurality (30) of vehicle components in the form of a second information set, which is based on a second data format, wherein access takes place via the data switching apparatus, wherein the first information set is based on a first data format, wherein at least one redundant information item in the first information set of the first plurality (30) of vehicle components was resolved by means of the data switching apparatus and thus the third information set was formed, wherein a transformation of the third information set, which is in the first data format, into the second data format was carried out by means of the data switching apparatus (10).

12. Data switching method for a vehicle (100), the data switching method comprising:
communicating (110) with a first plurality of vehicle components of the vehicle on the basis of at least one first data format;
communicating (120) with a second plurality of vehicle components of the vehicle on the basis of at least one second data format;
providing (130) a communication interface for communication between the first plurality of vehicle components and the second plurality of vehicle components,
wherein providing (130) the communication interface comprises providing access to a first information set of the first plurality of vehicle components by providing a second information set for the second plurality of vehicle components, wherein the first information set is based on the at least one first data format, and wherein the second information set is based on the at least one second data format,
wherein at least one redundant information item is resolved in the first information set of the first plurality of vehicle components, thus forming the third information set,
wherein the data switching method is intended to provide a transformation of the third information set, which is in the first data format, into the second data format by mapping the contents of the third information set, which is in the first data format, into the second data format and/or by converting the contents of the third information set, which is in the first data format, into the second data format,
such that, by resolving the redundant information item, uniform access to the data of the first plurality of vehicle components is enabled, by way of always providing the information from the same source or sources of the first plurality of vehicle components when accessed by multiple vehicle components of the second plurality of vehicle components.

13. Method according to claim 12, wherein the method steps mentioned in claim 12 are carried out by means of a data switching apparatus, wherein the method further comprises the following steps, wherein the following steps are carried out by means of a vehicle component of a vehicle:
communicating (210) with the data switching apparatus (10) of the vehicle (100); and
using (220) the data switching apparatus (10) to access the first information set of a first plurality of vehicle components in the form of the second information set, which is based on a second data format, wherein access takes place via the data switching apparatus, wherein the first information set is based on a first data format, wherein at least one redundant information item in the first information set of the first plurality of vehicle components was resolved by means of the data switching apparatus and thus the third information set was formed, wherein a transformation of the third information set, which is in the first data format, into the second data format was carried out by means of the data switching apparatus (10).

14. Program comprising a program code for carrying out at least the method according to claim 12 when the program code is executed on a computer, a processor, a controller, or a programmable hardware component.

## Revendications

1. Dispositif de transfert de données (10) pour un véhicule (100), le
dispositif de transfert de données (10) comprenant :
au moins une interface (12), configurée pour communiquer avec une première pluralité (30) de composants de véhicule du véhicule (100) et pour communiquer avec une seconde pluralité (40) de composants de véhicule du véhicule (100) ; et
un module de commande (14), configuré pour communiquer avec la première pluralité (30) de composants de véhicule du véhicule sur la base d'au moins un premier format de données et avec la seconde pluralité de composants de véhicule (40) du véhicule sur la base d'au moins un second format de données,
dans lequel le module de commande (14) est configuré pour fournir une interface de communication pour la communication entre la première pluralité (30) de composants de véhicule et la seconde pluralité (40) de composants de véhicule, dans lequel une communication entre la première pluralité de composants de véhicule et l'interface de communication et une communication entre la seconde pluralité de composants de véhicule et l'interface de communication sont respectivement effectuées par l'intermédiaire de l'au moins une interface,
dans lequel le module de commande (14) est configuré pour fournir un accès à des premières informations de la première pluralité (30) de composants de véhicule en fournissant des deuxièmes informations pour la seconde pluralité (40) de composants de véhicule, dans lequel les premières informations sont basées sur l'au moins un premier format de données, et dans lequel les deuxièmes informations sont basées sur l'au moins un second format de données,
dans lequel le module de commande (14) est configuré pour résoudre au moins des informations redondantes dans les premières informations de la première pluralité (30) de composants de véhicule et former ainsi des troisièmes informations,
dans lequel le dispositif de transfert de données (10) est configuré pour fournir une conversion des troisièmes informations, lesquelles sont présentes dans le premier format de données, dans le second format de données par attribution des contenus des troisièmes informations dans le premier format de données dans le second format de données et/ou par conversion des contenus des troisièmes informations dans le premier format de données dans le second format de données,
de sorte que, au moyen de la résolution des informations redondantes, un accès uniforme aux données de la première pluralité (30) de composants de véhicule est permis par le fait que, lors d'accès par plusieurs composants de véhicule de la seconde pluralité (40) de composants de véhicule, les informations de la même source ou des mêmes sources de la première pluralité (30) de composants de véhicule sont toujours fournies.

2. Dispositif de transfert de données (10) selon la revendication 1, dans lequel le module de commande (14) est configuré pour fournir une conversion entre l'au moins un premier format de données et l'au moins un second format de données pour la communication entre la première pluralité (30) de composants de véhicule et la seconde pluralité (40) de composants de véhicule.

3. Dispositif de transfert de données (10) selon l'une des revendications précédentes, dans lequel le module de commande (14) est configuré pour fournir une communication sécurisée de bout en bout entre un premier composant de véhicule de la première pluralité (30) de composants de véhicule et un second composant de véhicule de la seconde pluralité (40) de composants de véhicule.

4. Dispositif de transfert de données (10) selon la revendication 3, dans lequel le module de commande (14) est configuré pour sécuriser la communication sécurisée de bout en bout par une détermination d'au moins une erreur de transmission et/ou une transmission d'informations concernant l'au moins une erreur de transmission.

5. Dispositif de transfert de données (10) selon l'une des revendications précédentes, dans lequel le module de commande (14) est configuré pour convertir des signes d'erreur de la communication basée sur le premier format de données de la première pluralité (30) de composants de véhicule dans le second format de données et pour les fournir à la seconde pluralité (40) de composants de véhicule,
et/ou dans lequel le module de commande (14) est configuré pour convertir des signes d'erreur de la communication basée sur le second format de données de la seconde pluralité (40) de composants de véhicule dans le premier format de données et pour les fournir à la première pluralité (30) de composants de véhicule.

6. Dispositif de transfert de données (10) selon l'une des revendications précédentes, dans lequel au moins un composant de véhicule est compris dans la première pluralité (30) de composants de véhicule et dans la seconde pluralité (40) de composants de véhicule.

7. Dispositif de transfert de données (10) selon l'une des revendications précédentes, dans lequel la première pluralité (30) de composants du véhicule correspond à une pluralité d'appareils de commande pour la commande de capteurs de véhicule et/ou pour la commande d'actionneurs de véhicule,
et/ou dans lequel la seconde pluralité (40) de composants de véhicule comprend une pluralité d'unités de calcul du véhicule (100).

8. Dispositif de transfert de données (10) selon l'une des revendications précédentes, dans lequel le module de commande (14) est configuré pour fournir l'interface de communication sur la base d'informations de configuration, dans lequel le module de commande (14) est en outre configuré pour obtenir des informations de configuration mises à jour pour renouveler les informations de configuration.

9. Dispositif de transfert de données (10) selon l'une des revendications précédentes, dans lequel le module de commande (14) est configuré pour obtenir les premières informations de la première pluralité (30) de composants de véhicule en continu à partir de la première pluralité (30) de composants de véhicule, pour déterminer les deuxièmes informations sur la base des premières informations, et pour les fournir à la seconde pluralité (40) de composants de véhicule,
et/ou dans lequel le module de commande (14) est configuré pour obtenir les premières informations de la première pluralité (30) de composants de véhicule en continu à partir de la première pluralité (30) de composants de véhicule, dans lequel le module de commande (14) est configuré pour déterminer une chronologie pour l'obtention des premières informations de la première pluralité (30) de composants de véhicule.

10. Dispositif de transfert de données (10) selon l'une des revendications précédentes, dans lequel le module de commande (14) est configuré pour fournir les deuxièmes informations pour la seconde pluralité (40) de composants de véhicule par l'intermédiaire d'une interface de programmation orientée objet,
et/ou dans lequel le second format de données est un format de données orienté objet.

11. Système, comprenant le dispositif de transfert de données selon l'une des revendications 1 à 10 ainsi qu'un dispositif (20) pour un composant de véhicule d'un véhicule, le dispositif pour le composant de véhicule comprenant :
une interface (22), configurée pour la communication avec un dispositif de transfert de données (10) du véhicule (100) ; et
un module de commande (24) qui est configuré pour utiliser le dispositif de transfert de données (10) afin d'accéder à des premières informations d'une première pluralité (30) de composants de véhicule sous la forme de deuxièmes informations basées sur un second format de données, dans lequel l'accès est réalisé par l'intermédiaire du dispositif de transfert de données, dans lequel les premières informations sont basées sur un premier format de données, dans lequel, au moyen du dispositif de transfert de données, au moins des informations redondantes dans les premières informations de la première pluralité (30) de composants de véhicule ont été résolues et des troisièmes informations ont ainsi été formées, dans lequel une conversion des troisièmes informations, lesquelles sont présentes dans le premier format de données, dans le second format de données a été effectuée par le dispositif de transfert de données (10).

12. Procédé de transfert de données pour un véhicule (100), le procédé de transfert de données comprenant :
la communication (110) avec une première pluralité de composants de véhicule du véhicule sur la base d'au moins un premier format de données ;
la communication (120) avec une seconde pluralité de composants de véhicule du véhicule sur la base d'au moins un second format de données ;
la fourniture (130) d'une interface de communication pour la communication entre la première pluralité de composants de véhicule et la seconde pluralité de composants de véhicule,
dans lequel la fourniture (130) de l'interface de communication comprend la fourniture d'un accès à des premières informations de la première pluralité de composants de véhicule en fournissant des deuxièmes informations pour la seconde pluralité de composants de véhicule, dans lequel les premières informations sont basées sur l'au moins un premier format de données, et les deuxièmes informations sont basées sur l'au moins un second format de données,
dans lequel au moins des informations redondantes dans les premières informations de la première pluralité de composants de véhicule sont résolues et des troisièmes informations sont ainsi formées,
dans lequel le procédé de transfert de données est prévu pour fournir une conversion des troisièmes informations, lesquelles sont présentes dans le premier format de données, dans le second format de données par attribution des contenus des troisièmes informations dans le premier format de données dans le second format de données et/ou par conversion des contenus des troisièmes informations dans le premier format de données dans le second format de données,
de sorte que, au moyen de la résolution des informations redondantes, un accès uniforme aux données de la première pluralité de composants de véhicule est permis par le fait que, lors d'accès par plusieurs composants de véhicule de la seconde pluralité de composants de véhicule, les informations de la même source ou des mêmes sources de la première pluralité de composants de véhicule sont toujours fournies.

13. Procédé selon la revendication 12, dans lequel les étapes de procédé mentionnées dans la revendication 12 sont effectuées par un dispositif de transfert de données, dans lequel le procédé comprend en outre les étapes suivantes, dans lequel les étapes suivantes sont exécutées par un composant de véhicule d'un véhicule :
communication (210) avec le dispositif de transfert de données (10) du véhicule (100) ; et
utilisation (220) du dispositif de transfert de données (10) pour accéder à des premières informations d'une première pluralité de composants de véhicule sous la forme de deuxièmes informations basées sur un second format de données, dans lequel l'accès est réalisé par l'intermédiaire du dispositif de transfert de données, dans lequel les premières informations sont basées sur un premier format de données, dans lequel au moins des informations redondantes dans les premières informations de la première pluralité de composants de véhicule ont été résolues au moyen du dispositif de transfert de données et des troisièmes informations ont ainsi été formées, dans lequel une conversion des troisièmes informations, lesquelles sont présentes dans le premier format de données, dans le second format de données a été effectuée par le dispositif de transfert de données (10).

14. Programme comportant un code de programme pour la mise en œuvre d'au moins le procédé selon la revendication 12, lorsque le code de programme est exécuté sur un ordinateur, un processeur, un appareil de commande ou un composant matériel programmable.
